# EUROPÄISCHE PATENTSCHRIFT

(11) **EP 1 412 436 B1**
(45) Veröffentlichungstag und Bekanntmachung des Hinweises auf die Patenterteilung: **12.04.2006**
(21) Anmeldenummer: 02751157.5
(22) Anmeldetag: 23.07.2002
(51) Int. Cl.: C09D 5/02, C09D 133/06

(54) **STRUKTURVISKOSE KLARLACK-SLURRY, VERFAHREN ZU IHRER HERSTELLUNG UND IHRE VERWENDUNG**
STRUCTURALLY VISCOSE CLEAR LACQUER SLURRY, METHOD FOR THE PRODUCTION AND USE THEREOF
VERNIS INCOLORE A VISCOSITE INTRINSEQUE SE PRESENTANT SOUS LA FORME D'UNE PATE, SON PROCEDE DE PRODUCTION ET SON UTILISATION

(30) Priorität: 24.07.2001 DE 10135998
(43) Veröffentlichungstag der Anmeldung: 28.04.2004
(73) Patentinhaber: BASF Coatings AG, 48165 Münster (DE)
(72) Erfinder: RAKA, Fatmir, 48143 Münster (DE); WOLTERING, Joachim, 48159 Münster (DE); FLORACK, Heike, 48565 Steinfurt (DE)
(74) Vertreter: Fitzner, Uwe
(86) Internationale Anmeldenummer: PCT/EP2002/008170
(87) Internationale Veröffentlichungsnummer: WO 2003/010247

(56) Entgegenhaltungen:
- DE-A- 19 841 842
- DE-A- 19 908 018

## Beschreibung

Die vorliegende Erfindung betrifft eine neue strukturviskose Klarlack-Slurry. Außerdem betrifft die vorliegende Erfindung ein neues Verfahren zur Herstellung strukturviskoser Klarlack-Slurries. Des weiteren betrifft die vorliegende Erfindung die Verwendung der neuen strukturviskosen Klarlack-Slurry für die Automobilerstlackierung, die Automobilreparaturlackierung, die Lackierung von Bauwerken im Innen- und Außenbereich, die Lackierung von Türen, Fenstern und Möbeln sowie die industrielle Lackierung, inklusive Coil Coating, Container Coating, die Kleinteilelackierung, die Imprägnierung und/oder Beschichtung elektrotechnischer Bauteile und die Lackierung von weißer Ware. Nicht zuletzt betrifft die vorliegende Erfindung die Verwendung der neuen Klarlack-Slurries als Klebstoffe und Dichtungsmassen zur Herstellung von Klebschichten und Dichtungen, insbesondere auf den vorstehend genannten Gebieten.

Aus der deutschen Patentanmeldung DE 196 17 086 A 1 ist eine Pulverklarlack- Slurry bekannt, die mit Hilfe eines Sekundärdispersionsverfahrens, bei dem die Dispergiervorrichtungen Druckentspannungshomogenisierdüsen enthalten, herstellbar ist. Es ist notwendig, zur Stabilisierung zusätzlich zu der ionischen Stabilisierung auch noch externen Emulgatoren oder Netzmittel anzuwenden, die indes nicht näher spezifiziert werden. Außerdem enthalten diese bekannten Klarlack-Slurries immer gewisse Mengen an organischen Cosolventien oder Verlaufmitteln, die nicht entfernt werden können, weil sie für die Verlaufseigenschaften des angetrockneten Films essentiell sind. Vor der Applikation der Klarlack-Slurries werden sie mit Hilfe von Verdickern auf die Applikationsviskosität eingestellt; ein komplexes Viskositätsverhalten wird indes nicht beschrieben.

Eine vergleichbare Klarlack-Slurry ist noch aus der europäischen Patentanmeldung EP 0 899 282 A2 bekannt. Die bekannte Klarlack-Slurry kann nach einem Direktdispergierverfahren oder nach dem Phasenumkehrverfahren hergestellt werden. Mit dem Phasenumkehrverfahren ist das nachstehend aufgeführte Sekundärdispersionsverfahren gemeint. Wesentlich ist, daß bei der Herstellung eine Dispergiervorrichtung mit einer volumenbezogenen Dispergierleistung von 1 x 10 bis 9,8 x 10.000 W/cm³ eingesetzt wird. Die bekannten Klarlack-Slurries benötigen zu ihrer Stabilisierung nicht näher spezifizierte externe Emulgatoren oder Netzmittel; ein komplexes Viskositätsverhalten wird nicht beschrieben.

Hier hat die aus dem deutschen Patent DE 198 41 842 C 2 bekannte strukturviskose Klarlack-Slurry wesentliche Fortschritte mit sich gebracht.

Die bekannte strukturviskose Klarlack-Slurry ist von organischen Lösemitteln und externen Emulgatoren frei und enthält feste sphärische Partikel einer mittleren Teilchengröße von 0,8 bis 20 µm und einer maximalen Teilchengröße von 30 µm, wobei die Klarlack-Slurry einen Gehalt an Ionen bildenden Gruppen von 0,05 bis 1 meq/g, einen Gehalt an Neutralisationsmitteln von 0,05 bis 1 meq/g und eine Viskosität von
(i) 50 bis 1000 mPas bei einer Scherrate von 1.000 s⁻¹,
(ii) 150 bis 8.000 mPas bei einer Scherrate von 10 s⁻¹ und
(iii) 180 bis 12.000 mPas bei einer Scherrate von 1 s⁻¹
aufweist.

Die bekannte strukturviskose Klarlack-Slurry wird durch
1) Emulgieren einer organischen Lösung, enthaltend Bindemittel und Vernetzungsmittel, in Wasser, wodurch eine Emulsion vom Typ Öl-in-Wasser resultiert,
2) Entfernen des organischen Lösemittels oder der organischen Lösemittel und
3) teilweisen oder völligen Ersatz des entfernten Lösemittelvolumens durch Wasser, wodurch eine Klarlack-Slurry mit festen sphärischen Partikeln resultiert,
   hergestellt, wobei der Klarlack-Slurry
4) noch mindestens ein ionischer, insbesondere anionischer, Verdicker und mindestens ein nicht ionischer Assoziativ-Verdicker zugesetzt werden.

Hier und im folgenden wird das Verfahren gemäß den Verfahrensschritten (1) bis (3) als Sekundärdispersionsverfahren bezeichnet.

Diese Klarlack-Slurry ist mit einer geringen Anzahl an Verarbeitungsschritten herstellbar; dabei weist sie aufgrund ihrer typischen Pulverslurryeigenschaften mit Restlösemitteigehalten von < 1 % und ihren Partikelgrößen ein vorteilhaftes Applikationsverhalten auf. Bei den geforderten Filmschichtdicken von ca. 40 - 50 µm treten im allgemeinen auch ohne Zuhilfenahme von organischen Lösemitteln keine Kocher auf. Außerdem sind ihre Partikel wegen Vermischung ihrer Bestandteile in Lösung sehr homogen. Die resultierenden Klarlackierungen sind brillant, chemikalienbeständig und von sehr gutem Verlauf ohne Kocher und Rißbildung.

Die Klarlack-Slurries sind sehr gut für die Herstellung von Klarlackierungen für hochwertige farb- und/oder effektgebende Mehrschichtlackierungen geeignet, wie sie beispielsweise für die Beschichtung von Automobilen eingesetzt werden. Dabei können sie bei der Herstellung dieser farb- und/oder effektgebenden Mehrschichtlackierungen nach dem Naß-in-naß-Verfahren in Kombination mit den unterschiedlichsten Wasserbasislacken eingesetzt werden, ohne daß es zu so nachteiligen Effekten wie der Rißbildung (mud cracking), kommt.

In der nicht vorveröffentlichten deutschen Patentanmeldung DE 100 01 442.9 wird die Klarlack-Slurry des deutschen Patent DE 198 41 842 C 2 noch nachträglich einer Naßvermahlung unterworfen.

In der nicht vorveröffentlichten deutschen Patentanmeldung DE 100 55 464.4 wird eine strukturviskose, von organischen Lösemitteln und externen Emulgatoren freie Klarlack-Slurry beschrieben, enthaltend feste und/oder hochviskose, unter Lagerungs- und Anwendungsbedingungen dimensionsstabile Partikel, wobei
1. die Partikel
   1.1 eine mittleren Teilchengröße von 1,0 bis 20 µm aufweisen, wobei mindestens 99% der Partikel eine Teilchengröße ≤30 µm haben, und
   1.2 mindestens ein Polyol einer OH-Zahl >110 mg KOH/g, enthaltend potentiell ionische Gruppen, als Bindemittel enthalten,
   und wobei
2. die Klarlack-Slurry
   2.1 einen Gehalt an potentiell ionischen Gruppen von 0,01 bis 1 meq/g Festkörper,
   2.2 bei einem Neutralisationsgrad von höchstens 50% einen Gehalt an durch Neutralisation der potentiell ionischen Gruppen erzeugten ionischen Gruppen von 0,005 bis 0,1 meq/g Festkörper und
   2.3 eine Viskosität von (i) 50 bis 1000 mPas bei einer Scherrate von 1000 s⁻¹, (ii) 150 bis 8000 mPas bei einer Scherrate von 10 s⁻¹ und (iii) 180 bis 12000 mPas bei einer Scherrate von 1 s⁻¹
   aufweist. Die strukturviskose Klarlack-Slurries kann ebenfalls nach dem Sekundärdispersionsverfahren hergestellt werden.

In der nicht vorveröffentlichten deutschen Patentanmeldung DE 100 27 290.8 werden Klarlack-Slurries beschrieben, die unter anderem nach dem Sekundärdispersionsverfahren hergestellt werden können. Der wesentliche Bestandteil der Klarlack-Slurries ist mindestens ein Addukt von Ethylenoxid und/oder Propylenoxid an mindestens ein Glykol, insbesondere Ethylenglykol, 1,3- und/oder 1,2-Propylenglykol oder 1,2-, 1,3- und/oder 1,4-Butylenglykol. Beispiele gut geeigneter Addukte sind Polyethylenglykole, Polypropylenglykole, Blockmischpolymerisate von Ethylenoxid und Propylenoxid (Pluronics®) oder Polytetramethylenglykole (Polytetrahydrofurane) (vgl. Römpp Lexikon Lacke und Druckfarben, Georg Thieme Verlag, 1998, Seite 457, "Polyalkylenglykole"), von denen die Addukte von Propylenoxid an 1,3- und/oder 1,2-Propylenglykol, d.h. die Polypropylenglykole, besonders vorteilhaft sind und daher erfindungsgemäß besonders bevorzugt verwendet werden. Besonders gut geeignete Polypropylenglykole weisen ein zahlenmittleres Molekulargewicht von 350 bis 1.000, bevorzugt 400 bis 950, besonders bevorzugt 450 bis 900, ganz besonder bevorzugt 500 bis 850 und insbesondere 550 bis 800 Dalton auf. Die Polypropylenglykole sind kommerzielle Produkte und werden beispielsweise von der Firma BASF Aktiengesellschaft unter der Marke Pluriol® 400, 600 oder 900 vertrieben, wobei die nachgestellten Ziffern das Molekulargewicht oder dessen Größenordnung angeben. Der Gehalt der Klarlack-Slurries an den Addukten liegt vorzugsweise bei 0,01 bis 2,0 Gew.-%, jeweils bezogen auf den Festkörper einer gegebenen Klarlack-Slurry. Die Addukte werden den Klarlack-Slurries vor der Naßvermahlung zugesetzt.

Da die Klarlack-Slurries vor ihrer Applikationen filtriert werden müssen, ist es wesentlich, daß sie eine gute Filtrierbarkeit aufweisen. Dabei werden sie in den Anlagen der Anwender, insbesondere in den Linien der Automobilhersteller, durch Zahnradpumpen gefördert. Durch diese Belastung kann aber die Filtrierbarkeit signifikant verschlechtert werden. Durch die schlechtere Filtrierbarkeit der belasteten Klarlack-Slurries resultieren Klarlackierungen mit verschlechterten optischen Eigenschaften (Appearance). Ein Zusatz von externen Emulgatoren oder Netzmitteln verbessert häufig die Filtrierbarkeit, verschlechtert aber die Zahnradpumpengängigkeit und das strukturviskose Verhalten der Klarlack-Slurries sowie die Chemikalienbeständigkeit der hieraus hergestellten Klarlackierungen.

Aufgabe der vorliegenden Erfindung ist es, eine neue strukturviskose Klarlack-Slurry bereitzustellen, die die Nachteile des Standes der Technik nicht mehr länger aufweist, sondern bei einer guten Filtrierbarkeit eine gute Zahnradpumpengängigkeit aufweist. Die neue strukturviskose Klarlack-Slurry soll Klarlackierungen liefern, die in ihren optischen Eigenschaften (Appearance) und Chemikalienbeständigkeit den aus den bekannten Klarlack-Slurries hergestellten Klarlackierungen zumindest ebenbürtig sind.

Demgemäß wurde die neue strukturviskose Klarlack-Slurry gefunden, enthaltend feste und/oder hochviskose, unter Lagerungs- und Anwendungsbedingungen dimensionsstabile Partikel und mindestens ein Netzmittel, ausgewählt aus der Gruppe, bestehend aus alkoxylierten Fettalkoholen mit 16 bis 18 Kohlenstoffatomen im Alkylrest und im statistischen Mittel mindestens 20 Oxaalkandiyl-Gruppen im Molekül.

Im folgenden wird die neue strukturviskose Klarlack-Slurry als "erfindungsgemäße Slurry" bezeichnet.

Weitere Erfindungsgegenstände gehen aus der Beschreibung hervor.

Im Hinblick auf den Stand der Technik war es für den Fachmann überraschend und nicht vorhersehbar, daß die der vorliegenden Erfindung zugrundeliegende Aufgabe dadurch gelöst werden konnte, daß an sich bekannten Klarlack-Slurries eine geringe Mengen speziell ausgewählter Netzmittel zugesetzt wurde. Dies war umso überraschender, als aus dem Stand der Technik keine Hinweise auf einen Zusammenhang zwischen den erfindungsgemäß zu verwendenden Netzmitteln einerseits und der Filtrierbarkeit und Zahnradpumpengängigkeit von Klarlack-Slurries andererseits hervorgehen.

Die erfindungsgemäßen Slurries können von unterschiedlicher Zusammensetzung sein. So kommen beispielsweise
- die aus den deutschen Patentanmeldungen DE 195 40 977 A 1 oder DE 19832 2 06 A 1 bekannten, mit Hilfe von Mahl- und Dispergierverfahren hergestellten, thermisch oder mit aktinischer Strahlung härtbaren Klarlack-Slurries,
- die aus der deutschen Patentanmeldung DE 199 59 923 A 1 bekannten, mit Hilfe von Primärdispersionsverfahren hergestellten, thermisch oder thermisch und mit aktinischer Strahlung härtbaren Klarlack-Slurries,
- die aus den internationalen Patentanmeldungen WO 97/45476, WO 98/45356 oder WO 00/17256 oder dem amerikanischen Patent US 4,056,653 A bekannten oder in den nicht vorveröffentlichten deutschen Patentanmeldungen DE 100 06 673.9 oder DE 100 18 581.9 beschriebenen thermisch oder thermisch und mit aktinischer Strahlung härtbaren Klarlack-Slurries, die mit Hilfe von Schmelzeemulgierverfahren hergestellt werden, oder
- die aus den deutschen Patentanmeldungen DE 198 41 842 A 1, DE 196 17 086 A 1 oder DE 199 08 018 A 1 oder der europäischen Patentanmeldung EP 0 899 282 A 1 bekannten oder in der vorveröffentlichten deutschen Patentanmeldung DE 100 55 464.4 beschriebenen, mit Hilfe von Sekundärdispersionsverfahren hergestellten, thermisch oder thermisch und mit aktinischer Strahlung härtbaren Klarlack-Slurries
als Basis für die erfindungsgemäßen Slurries in Betracht.

Von diesen sind die aus den deutschen Patentanmeldungen DE 198 41 842 A 1 oder DE 199 08 018 A 1 bekannten oder die in der nicht vorveröffentlichten deutschen Patentanmeldung DE 100 55 464.4 beschriebenen, mit Hilfe von Sekundärdispersionsverfahren hergestellten, thermisch oder thermisch und mit aktinischer Strahlung härtbaren, von organischen Lösemitteln freien oder im wesentlichen freien Klarlack-Slurries von Vorteil und werden daher erfindungsgemäß bevorzugt eingesetzt.

Ganz besonders bevorzugt sind die nach dem Sekundärdispersionsverfahren hergestellten Klarlack-Slurries, die die nachstehend beschriebenen speziellen Methacrylatcopolymerisate als Bindemittel in den dimensionsstabilen Partikeln enthalten.

Die erfindungsgemäße Slurry enthält als erfindungswesentlichen Bestandteil mindestens ein, insbesondere ein, Netzmittel, ausgewählt aus der Gruppe, bestehend aus alkoxylierten Fettalkoholen mit 16 bis 18 Kohlenstoffatomen im Alkylrest und im statistischen Mittel mindestens 20, vorzugsweise mindestens 25, bevorzugt mindestens 30, besonders bevorzugt mindestens 35, ganz besonders bevorzugt mindestens 40 und insbesondere mindestens 45 Oxaalkandiyl-Gruppen im Molekül.

Geeignete Oxaalkandiyl-Gruppen sind 1-Oxapropan-1,3-diyl, 1-Oxabutan-1,4-diyl, 1-Oxabutan-1,3-diyl, 1-Oxapentan-1,5-diyl oder 1-Oxapentan-1,3-diyl, bevorzugt 1-Oxapropan-1,3-diyl und 1-Oxabutan-1,3-diyl, insbesondere 1-Oxapropan-1,3-diyl (Ethylenoxid-Gruppe).

Das Netzmittel kann mindestens zwei Arten dieser Oxaalkandiyl-Gruppen enthalten. Die Oxaalkandiyl-Ketten können dabei statistisch, alternierend oder blockartig aufgebaut sein. Vorzugsweise enthält das Netzmittel nur eine Art von Oxaalkandiyl-Gruppen, insbesondere die Ethylenoxid-Gruppen.

Die erfindungsgemäß bevorzugt verwendeten Netzmittel aus der Gruppe der Fettalkohole mit 16 bis 18 Kohlenstoffatome im Alkylrest und mit mindestens 20 Ethylenoxid-Gruppen im Molekül sind handelsübliche Verbindungen und werden beispielsweise von der Firma BASF Aktiengesellschaft unter der Marke Lutensol ® AT 25 (25 Ethylenoxid-Gruppen im Molekül) und AT 50 (50 Ethylenoxid-Gruppen im Molekül) vertrieben.

Vorzugsweise werden die erfindungsgemäß zu verwendenden Netzmittel in einer Menge von 0,01 bis 2,5, bevorzugt 0,05 bis 2,4, besonders bevorzugt 0,1 bis 2,2, ganz besonders bevorzugt 0,15 bis 2 und insbesondere 0,2 bis 1,8 Gew.-%, jeweils bezogen auf eine gegebene Klarlack-Slurry, verwendet.

Die erfindungsgemäße Slurry enthält dimensionsstabile Partikel. Im Rahmen der vorliegenden Erfindung bedeutet "dimensionsstabil", daß die Partikel unter den üblichen und bekannten Bedingungen der Lagerung und der Anwendung von Klarlack-Slurries, wenn überhaupt, nur geringfügig agglomerieren und/oder in kleinere Teilchen zerfallen, sondern auch unter dem Einfluß von Scherkräften im wesentlichen ihre ursprünglichen Form bewahren. Dabei können die Partikel hochviskos und/oder fest sein. Vorzugsweise sind die dimensionsstabilen Partikel fest.

Für die erfindungsgemäße Slurry ist es vorteilhaft, wenn die mittlere Teilchengröße der Partikel bei 1 bis 20 µm und besonders bevorzugt bei 3 bis 15 µm liegt. Unter mittlerer Teilchengröße wird der nach der Laserbeugungsmethode ermittelte 50%-Medianwert verstanden, d.h., 50% der Partikel haben einen Teilchendurchmesser ≤ dem Medianwert und 50% der Partikel einen Teilchendurchmesser ≥ dem Medianwert. Dabei haben vorzugsweise mindestens 99% der Partikel eine Teilchengröße <30 µm.

Slurries mit derartigen mittleren Teilchengrößen und einem Lösemittelgehalt von < 1 % weisen ein besseres Applikafionsverhalten auf und zeigen bei den applizierten Schichtdicken von > 30 µm, wie sie derzeitig in der Automobilindustrie bei der Endlackierung von Automobilen praktiziert werden, eine deutlich geringere Neigung zu Kochern und zum "mudcracking" als herkömmliche Klarlack-Slurries.

Die Teilchengröße findet ihre obere Begrenzung dann, wenn die Partikel aufgrund ihrer Größe beim Einbrennen nicht mehr vollständig verlaufen können, und damit der Filmverlauf negativ beeinflußt wird. In Fällen geringerer Ansprüche an das Aussehen kann sie jedoch auch höher liegen. Als Obergrenze werden 30 µm für sinnvoll erachtet, da ab dieser Teilchengröße mit einer Verstopfung der Sprühdüsen und der Spülkanäle der hochempfindlichen Applikationsapparaturen zu rechnen ist.

Die erfindungsgemäße Slurry ist frei vorzugsweise im wesentlichen oder völlig frei von organischen Lösemitteln. Im Rahmen der vorliegenden Erfindung bedeutet dies, daß sie einen Restgehalt an flüchtigen Lösemitteln von < 3 Gew.-%, bevorzugt < 2 Gew.-% und besonders bevorzugt < 1 Gew.-% hat.

Vorzugsweise hat die erfindungsgemäße Slurry einen Gehalt an potentiell ionischen Gruppen von, 0,05 bis 1, vorzugsweise 0,05 bis 0,9 bevorzugt 0,05 bis 0,8, besonders bevorzugt 0,05 bis 0,7 und insbesondere 0,05 bis 0,6 meq/g Festkörper hat. Vorzugsweise wird die Menge an Neutralisationsmitteln so gewählt, daß der Neutralisationsgrad bei 100%, bevorzugt unter 80%, besonders bevorzugt unter 60% und insbesondere unter 50% liegt.

Die chemische Natur des Bindemittels ist in dieser Hinsicht in der Regel nicht beschränkend, solange hierin lonen bildende Gruppen enthalten sind, die über eine Neutralisation in Salzgruppen überführbar sind und dadurch eine ionische Stabilisierung der Partikel in Wasser übernehmen können.

Als Anionen bildende Gruppen kommen Säuregruppen wie Carbonsäure-, Sulfonsäure- oder Phosphonsäuregruppen, insbesondere Carbonsäuregruppen, in Betracht. Demgemäß werden als Neutralisationsmittel Basen, wie Alkalimetallhydroxide, Ammoniak oder Amine verwendet. Alkalimetallhydroxide sind nur inbeschränktem Maße einsetzbar, da die Alkalimetallionen beim Einbrennen nicht flüchtig sind und durch ihre Unverträglichkeit mit organischen Stoffen den Film trüben und zu Glanzverlusten führen können. Daher sind Ammoniak oder Amine bevorzugt. Im Falle von Aminen werden tertiäre Amine bevorzugt. Beispielhaft seien N,N-Dimethylethanolamin oder Aminomethylpropanolamin (AMP) genannt.

Als Kationen bildende Gruppen kommen primäre, sekundäre oder tertiäre Amine in Betracht. Demgemäß werden als Neutralisationsmittel insbesondere niedermolekulare organische Säuren wie Ameisensäure, Essigsäure, Dimethylolpropionsäure oder Milchsäure verwendet.

Für den bevorzugten Einsatz der erfindungsgemäß Slurry in der Automobüdecklackierung als unpigmentierte Klarlacke werden Polymere oder Oligomere mit Säuregruppen als Ionen bildende Gruppen bevorzugt, da diese sogenannten anionischen Bindemittel in der Regel eine bessere Resistenz gegen Vergilbung als die Klasse der kationischen Bindemittel aufweisen.

Doch kationische Bindemittel mit in Kationen überführbaren Gruppen wie Aminogruppen sind prinzipiell ebenfalls verwendbar, sofern das Einsatzgebiet deren typische Nebeneigenschaften wie ihre Neigung zur Vergilbung verkraftet.

Beispiele für geeignete Bindemittel sind statistisch, alternierend und/oder blockartig aufgebaute lineare und/oder verzweigte und/oder kammartig aufgebaute (Co)Polymerisate von ethylenisch ungesättigten Monomeren, oder Polyadditionsharze und/oder Polykondensationsharze. Zu diesen Begriffen wird ergänzend auf Römpp Lexikon Lacke und Druckfarben, Georg Thieme Verlag, Stuttgart, New York, 1998, Seite 457, »Polyaddition« und »Polyaddifionsharze (Polyaddukte)«, sowie Seiten 463 und 464, »Polykondensate«, »Polykondensation« und »Polykondensationsharze«, sowie Seiten 73 und 74, "Bindemittel", verwiesen.

Beispiele geeigneter (Co)Polymerisate sind (Meth)Acrylat(co)polymerisate oder partiell verseifte Polyvinylester, insbesondere (Meth)Acrylatcopolymerisate.

Beispiele geeigneter Polyadditionsharze und/oder Polykondensationsharze sind Polyester, Alkyde, Polyurethane, Polylactone, Polycarbonate, Polyether, Epoxidharze, Epoxidharz-Amin-Addukte, Polyharnstoffe, Polyamide, Polyimide, Polyester-Polyurethane, Polyether-Polyurethane oder Polyester-Polyether-Polyurethane.

Diese Oligomere und Polymere sind dem Fachmann bekannt, und zahlreiche geeignete Verbindungen sind am Markt erhältlich.

Erfindungsgemäß sind die (Meth)Acrylatcopolymerisate, die Polyester, die Alkydharze, die Polyurethane und/oder die acrylierten Polyurethane von Vorteil und werden deshalb bevorzugt verwendet.

Gut geeignete (Meth)Acrylatcopolymerisate und Verfahren zu ihrer Herstellung werden beispielsweise in der deutschen Patentanmeldung DE 199 08 018 A 1,Seite 9, Zeile 44, bis Seite 10, Zeile 53, in der europäischen Patentanmeldung EP 0 767 185 A 1, den deutschen Patenten DE 22 14 650 B 1 oder DE 2749576 B 1 und den amerikanischen Patenten US 4,091,048 A, US 3,781,379 A, US 5,480,493 A, US 5,475,073 A oder US 5,534,598 A oder in dem Standardwerk Houben-Weyl, Methoden der organischen Chemie, 4. Auflage, Band 14/1, Seiten 24 bis 255, 1961, beschrieben. Als Reaktoren für die Copolymerisation kommen die üblichen und bekannten Rührkessel, Rührkesselkaskaden, Rohrreaktoren, Schlaufenreaktoren oder Taylorreaktoren, wie sie beispielsweise in den Patentanmeldungen DE 1 071 241 B 1, EP 0 498 583 A 1 oder DE 198 28 742 A 1 oder in dem Artikel von K. Kataoka in Chemical Engineering Science, Band 50, Heft 9, 1995, Seiten 1409 bis 1416, beschrieben werden, in Betracht.

Gut geeignete Polyester und Alkydharze sowie ihre Herstellung werden beispielsweise in dem Standardwerk Ullmanns Encyklopädie der technische Chemie, 3. Auflage, Band 14, Urban & Schwarzenberg, München, Berlin, 1963, Seiten 80 bis 89 und Seiten 99 bis 105, sowie in den Büchern: "Résines Alkydes-Polyesters" von J. Bourry, Paris, Verlag Dunod, 1952, "Alkyd Resins" von C. R. Martens, Reinhold Publishing Corporation, New York, 1961, sowie "Alkyd Resin Technology" von T. C. Patton, Intersience Publishers, 1962, beschrieben.

Gut geeignete Polyurethane und/oder acrylierte Polyurethane sowie ihre Herstellung werden beispielsweise in den Patentschriften EP 0 708 788 A 1, DE 44 01 544 A 1 oder DE 195 34 361 A 1 beschrieben.

Ganz besondere Vorteile resultieren für die erfindungsgemäßen Slurries, wenn ihre dimensionsstabilen Partikel als Bindemittel mindestens ein Methacrylatcopolymerisat enthalten, das, bezogen auf ein gegebenes Methacrylatcopolymerisat, mindestens 90, vorzugsweise mindestens 95 und insbesondere mindestens 99 Gew.-% Methacrylatcomonomere, inklusive potentiell ionische , Gruppen enthaltende Methacrylatcomonomere, einpolymerisiert enthält.

Vorzugsweise handelt es sich bei den potentiell ionische Gruppen enthaltenden (Meth)Acrylatcomonomeren um Acrylsäure, beta-Carboxyethylacrylat und/oder Methacrylsäure, insbesondere Methacrylsäure. Vorzugsweise werden die potentiell ionische Gruppen enthaltenden (Meth)Acrylatcomonomeren in einer Menge in die Methacrylatcopolymerisate einpolymerisiert, daß der vorstehend beschriebene Gehalt der Partikel an potentiell ionischen Gruppen problemlos eingestellt werden kann. Vorzugsweise werden sie in einer Menge von 0,1 bis 3, bevorzugt 0,2 bis 2,8, besonders bevorzugt 0,3 bis 2,6, ganz besonders bevorzugt 0,4 bis 2,4 und insbesondere 0,5 bis 2,2 Gew.-%, jeweils bezogen auf ein gegebenes Methacrylatcopolymerisat, in die Methacrylatcopolymerisate einpolymerisiert.

Vorzugsweise weisen die Methacrylatcopolymerisate eine Glasübergangstemperatur Tg von maximal 50 °C auf; dabei soll die Glasübergangstemperatur Tg vorzugsweise 0, bevorzugt 10 und insbesondere 20 °C nicht unterschreiten.

Vorzugsweise wird die Glasübergangstemperatur Tg der Methacrylatcopolymerisate über mindestens ein von reaktiven funktionellen Gruppen und von potentiell ionischen Gruppen freies Methacrylatcomonomer eingestellt. Bevorzugt wird die Glasübergangstemperatur Tg über mindestens zwei, insbesondere zwei, von reaktiven funktionellen Gruppen und von potentiell ionischen Gruppen freien Methacrylatcomonomeren eingestellt. Vorzugsweise weichen die Glasübergangstemperaturen Tg der jeweiligen Homopolymerisate der von reaktiven funktionellen Gruppen und von potentiell ionischen Gruppen freien Methacrylatcomonomeren um maximal 40 °C voneinander ab.

Beispiele geeigneter von reaktiven funktionellen Gruppen und von potentiell ionischen Gruppen freien Methacrylatcomonomeren sind Methyl-, Ethyl-, n-Propyl-, n-Butyl-, i-Butyl-, tert.-Butyl-, n-Pentyl-, Isoamyl-, Cyclopentyl-, n-Hexyl- und Cyclohexylmethacrylat. Von diesen sind i-Butylmethacrylat (Glasübergangstemperatur Tg des Homopolymerisats: 53 °C) und n-Butylmethacrylat (Glasübergangstemperatur Tg des Homopolymerisats: 20 °C) von Vorteil und werden deshalb besonders bevorzugt verwendet.

Die Menge der in die erfindungsgemäß zu verwendenden Methacrylatcopolymerisate einpolymerisierten, von reaktiven funktionellen Gruppen und von potentiell ionischen Gruppen freien Methacrylatcomonomeren kann breit variieren. Wesentlich ist, daß die Menge so gewählt wird, daß die resultierenden Methacrylatcopolymerisate die vorstehend beschriebenen Glasübergangstemperatur Tg aufweisen. Vorzugsweise liegt die Menge bei mindestens 50, bevorzugt mindestens 55, besonders bevorzugt mindestens 60, ganz besonders bevorzugt mindestens 65 und insbesondere mindestens 70 Gew.-%, jeweils bezogen auf ein gegebenes Methacrylatcopolymerisat.

Dabei kann das Gewichtsverhältnis der besonders bevorzugt verwendeten Methacrylatcomonomeren n-Butylmethacrylat und i-Butylmethacrylat breit variieren. Vorzugsweise liegt das Gewichtsverhältnis n : i bei 10 : 1 bis 1 :, bevorzugt 8 : 1 bis 1 : 4, besonders bevorzugt 6 : 1 bis 1 : 2, ganz besonders bevorzugt 5 : 1 bis 1 : 1,5 und insbesondere 4 : 1 bis 1 : 1.

Handelt es sich bei den erfindungsgemäßen Slurries um physikalisch härtbare, enthalten die Methacrylatcopolymerisate keine oder nur eine für die Vernetzung unwesentliche Anzahl an reaktiven funktionellen Gruppen.

Handelt es sich bei den erfindungsgemäßen Slurries um thermisch selbstvernetzende, enthalten die Methacrylatcopolymerisate die nachstehend beschriebenen komplementären reaktiven funktionellen Gruppen für die thermische Vernetzung und/oder reaktive funktionelle Gruppen, die "mit sich selbst", d. h. Gruppen der eigenen Art, vernetzen können.

Handelt es sich bei den erfindungsgemäßen Slurries um mit aktinischer Strahlung härtbare, können die Methacrylatcopolymerisate reaktive funktionelle Gruppen mit mindestens einer mit aktinischer Strahlung aktivierbaren Bindung enthalten. Diese reaktiven funktionellen Gruppen sind in den Methacrylatcopolymerisaten der mit aktinischer Strahlung härtbaren erfindungsgemäßen Slurries zwingend enthalten, wenn die Slurries keine weiteren strahlenhärtbaren Bestandteile enthalten.

Handelt es sich bei den erfindungsgemäßen Slurries um Dual-Cure-Slurries, enthalten die Methacrylatcopolymerisate reaktive funktionelle Gruppen für die thermische Vernetzung und/oder reaktive funktionelle Gruppen mit mindestens einer mit aktinischer Strahlung aktivierbaren Bindung enthalten. Die reaktiven funktionellen Gruppen mit mindestens einer mit aktinischer Strahlung aktivierbaren Bindung sind in den Methacrylatcopolymerisaten der erfindungsgemäßen Dual-Cure-Slurries zwingend enthalten, wenn die Dual-Cure-Slurries keine weiteren strahlenhärtbaren Bestandteile enthalten.

Beispiele geeigneter erfindungsgemäß zu verwendender komplementärer reaktiver funktioneller Gruppen sind in der folgenden Übersicht zusammengestellt. In der Übersicht steht die Variable R für einen acyclischen oder cyclischen aliphatischen, einen aromatischen und/oder einen aromatisch-aliphatischen (araliphatischen) Rest; die Variablen R und R" stehen für gleiche oder verschiedene aliphatische Reste oder sind miteinander zu einem aliphatischen oder heteroaliphatischen Ring verknüpft.

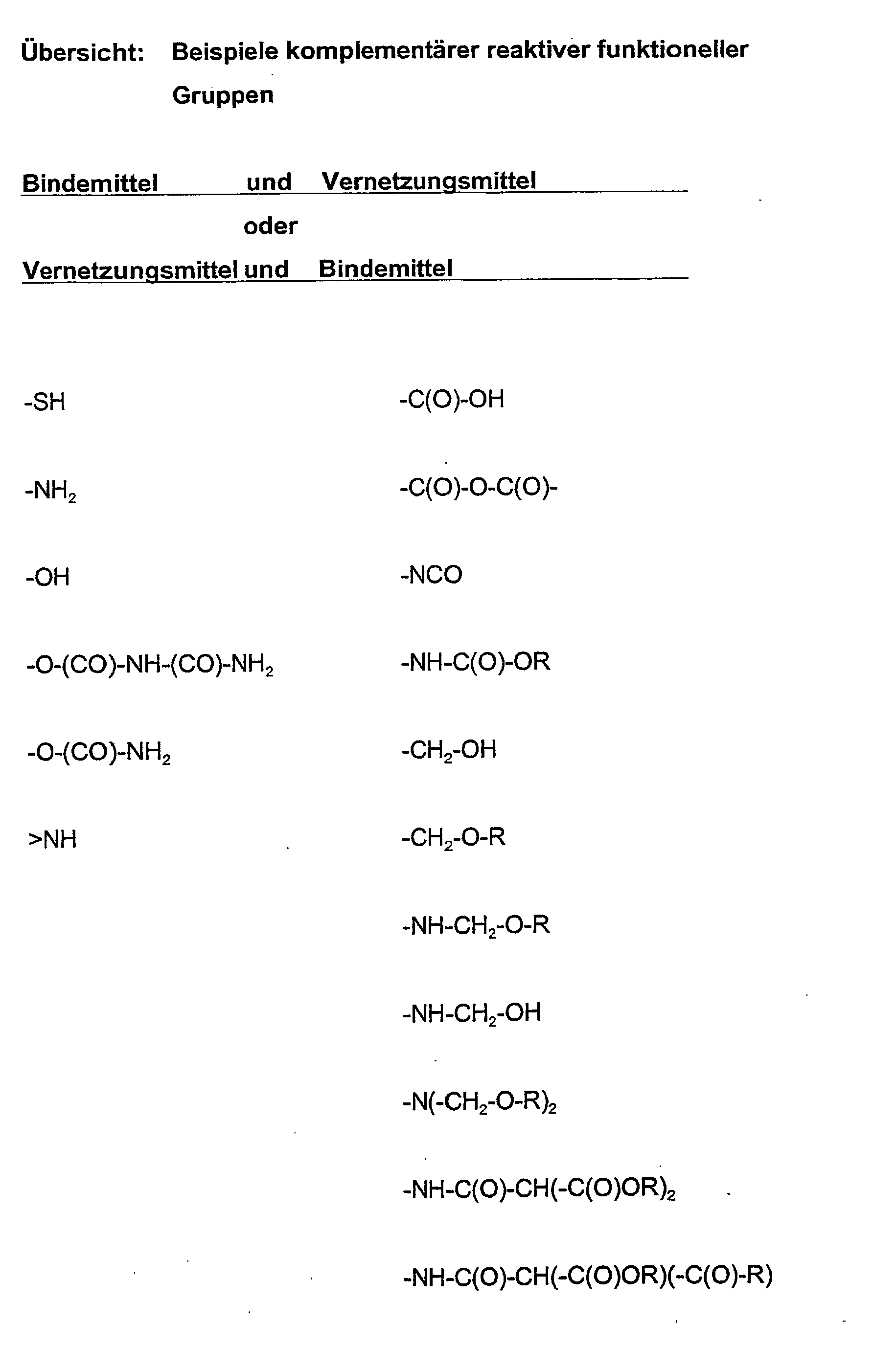

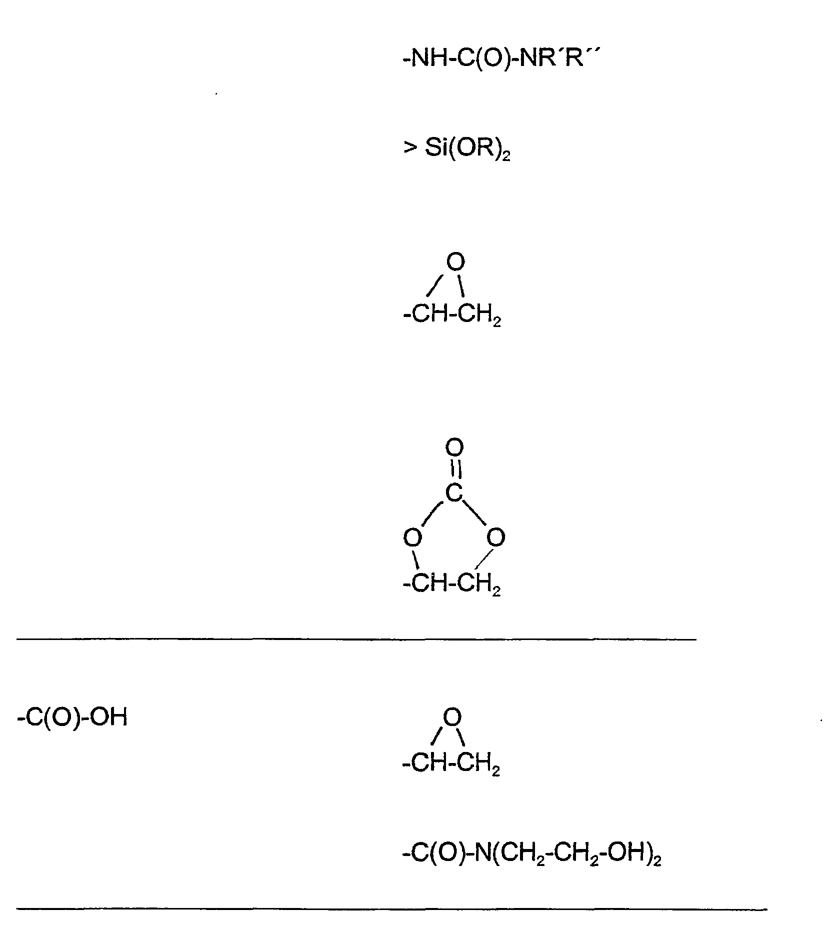

Die Auswahl der jeweiligen komplementären reaktiven funktionellen Gruppen Gruppen richtet sich zum einen danach, daß sie bei der Herstellung der Bindemittel sowie bei der Herstellung, der Lagerung, der Applikation und dem Aufschmelzen der erfindungsgemäßen Slurries keine unerwünschten Reaktionen, insbesondere keine Bildung von Polyelektrolytkomplexen oder vorzeitige Vernetzung, eingehen und/oder die Härtung mit aktinischer Strahlung nicht stören oder inhibieren dürfen, und zum anderen danach, in welchem Temperaturbereich die Vernetzung stattfinden soll.

Vorzugsweise werden bei den erfindungsgemäßen Slurries Vernetzungstemperaturen von 60 bis 180°C angewandt. Es werden daher vorzugsweise Bindemittel mit Thio-, Hydroxyl-, N-Methylolamino- N-Alkoxymethylamino-, Imino-, Carbamat- und/oder Allophanatgruppen, bevorzugt Hydroxylgruppen, einerseits und vorzugsweise Vernetzungsmittel mit Anhydrid-, Epoxy-, blockierten und unblockierten, insbesondere blockierten, Isocyanat-, Urethan-, Methylol-, Methylolether-, Siloxan-, Carbonat-, Amino-, Hydroxy- und/oder beta-Hydroxyalkylamidgruppen, bevorzugt blockierte Isocyanat-, Carbamat- und/oder N-Alkoxymethylaminogruppen, andererseits angewandt.

Im Falle selbstvernetzender erfindungsgemäßer Slurries enthalten die Bindemittel insbesondere Methylol-, Methylolether- und/oder N-Alkoxymethylaminogruppen.

Komplementäre reaktive funktionelle Gruppen, die für die Verwendung in den thermisch fremdvernetzenden erfindungsgemäßen Slurries und den erfindungsgemäßen Dual-Cure-Slurries besonders gut geeignet sind, sind Hydroxylgruppen einerseits und blockierte Isocyanatgruppen andererseits.

Die Funktionalität der Bindemittel bezüglich der vorstehend beschriebenen reaktiven funktionellen Gruppen kann sehr breit variieren und richtet sich insbesondere nach der Vernetzungsdichte, die man erzielen will, und/oder nach der Funktionalität der jeweils angewandten Vernetzungsmittel. Beispielsweise liegt im Falle hydroxylgruppenhaltiger Bindemittel die OH-Zahl vorzugsweise bei 20 bis 300, bevorzugt 40 bis 250, besonders bevorzugt 60 bis 200, ganz besonders bevorzugt 80 bis 190 und insbesondere 90 bis 180 mg KOH/g.

Die vorstehend beschriebenen komplementären reaktiven funktionellen Gruppen können nach den üblichen und bekannten Methoden der Polymerchemie in die Bindemittel eingebaut werden. Dies kann beispielsweise durch den Einbau von Methacrylatcomonomeren, die die entsprechenden reaktiven funktionellen Gruppen tragen, und/oder mit Hilfe polymeranaloger Reaktionen geschehen.

Beispiele geeigneter Methacrylatcomonomeren mit reaktiven funktionellen Gruppen sind Methacrylatcomonomere, welche mindestens eine Hydroxyl-, Amino-, Alkoxymethylamino-, Carbamat-, Allophanat- oder Iminogruppe pro Molekül tragen, wie
- Hydroxyalkylester der Methacrylsäure, die sich von einem Alkylenglykol ableiten, das mit der Säure verestert ist, oder die durch Umsetzung der Methacrylsäure mit einem Alkylenoxid wie Ethylenoxid oder Propylenoxid erhältlich sind, insbesondere Hydroxyalkylester der Methacrylsäure, in denen die Hydroxyalkylgruppe bis zu 20 Kohlenstoffatome enthält, wie 2-Hydroxyethyl-, 2-Hydroxypropyl-, 3-Hydroxypropyl-, 3-Hydroxybutyl- oder 4-Hydroxybutylmethacrylat; oder Hydroxycycloalkylester wie 1,4-Bis(hydroxymethyl)cyclohexan-, Octahydro-4,7-methano-1 H-inden-dimethanol- oder Methylpropandiolmonomethacrylat; oder Umsetzungsprodukte aus cyclischen Estern, wie z.B. epsilon-Caprolacton und diesen Hydroxyalkylmethacrylaten;
- Umsetzungsprodukte aus Methacrylsäure mit dem Glycidylester einer in alpha-Stellung verzweigten Monocarbonsäure mit 5 bis 18 C-Atomen je Molekül, insbesondere einer Versatic®-Säure, oder anstelle des Umsetzungsproduktes eine äquivalenten Menge Methacrylsäure, die dann während oder nach der Polymerisationsreaktion mit dem Glycidylester einer in alpha-Stellung verzweigten Monocarbonsäure mit 5 bis 18 C-Atomen je Molekül, insbesondere einer Versatic®-Säure, umgesetzt wird;
- Aminoethylmethacrylat oder N-Methylaminoethylmethacrylat, die auch der Einführung von potentiell ionischen Gruppen dienen können;
- N,N-Di(methoxymethyl)aminoethylmethacrylat oder N,N-Di(butoxymethyl)aminopropylmethacrylat;
- Methacrylsäureamide wie Methcrylsäureamid, N-Methyl-, N-Methylol-, N,N-Dimethylol-, N-Methoxymethyl-, N,N-Di(methoxymethyl)-, N-Ethoxymethyl- und/oder N,N-Di(ethoxyethyl)-methacrylsäureamid;
- Methacryloyloxyethyl-, propyl- oder butylcarbamat oder -allophanat; weitere Beispiele geeigneter Methacrylatcomonomere, welche Carbamatgruppen enthalten, werden in den Patentschriften US 3,479,328 A, US 3,674,838 A, US 4,126,747 A, US 4,279,833 A oder US 4,340,497 A beschrieben;

In untergeordneten Mengen können die reaktiven funktionellen Gruppen für die thermische Vernetzung über sonstige olefinisch ungesättigten Monomere, wie die entsprechenden Acrylate, Allylamin, Allylalkohol oder Polyole, wie Trimethylolpropanmono- oder diallylether oder Pentaerythritmono-, -di- oder -triallylether, eingeführt werden.

Die Bindemittel der Dual-Cure-Slurries können im statistischen Mittel mindestens eine, vorzugsweise mindestens zwei, Gruppe(n) mit mindestens einer mit aktinischer Strahlung aktivierbaren Bindung(en) pro Molekül enthalten.

Im Rahmen der vorliegenden Erfindung wird unter einer mit aktinischer Strahlung aktivierbaren Bindung eine Bindung verstanden, die bei Bestrahlen mit aktinischer Strahlung reaktiv wird und mit anderen aktivierten Bindungen ihrer Art Polymerisationsreaktionen und/oder Vernetzungsreaktionen eingeht, die nach radikalischen und/oder ionischen Mechanismen ablaufen. Beispiele geeigneter Bindungen sind Kohlenstoff-Wasserstoff-Einzelbindungen oder Kohlenstoff-Kohlenstoff-, Kohlenstoff-Sauerstoff-, Kohlenstoff-Stickstoff-, Kohlenstoff-Phosphor -oder Kohlenstoff-Silizium-Einzelbindungen oder -Doppelbindungen. Von diesen sind die Kohlenstoff-Kohlenstoff-Doppelbindungen besonders vorteilhaft und werden deshalb erfindungsgemäß ganz besonders bevorzugt verwendet. Der Kürze halber werden sie im folgenden als "Doppelbindungen" bezeichnet.

Demnach enthält die erfindungsgemäß bevorzugte Gruppe eine Doppelbindung oder zwei, drei oder vier Doppelbindungen. Werden mehr als eine Doppelbindung verwendet, können die Doppelbindungen konjugiert sein. Erfindungsgemäß ist es indes von Vorteil, wenn die Doppelbindungen isoliert, insbesondere jede für sich endständig, in der hier in Rede stehenden Gruppe vorliegen. Erfindungsgemäß ist es von besonderem Vorteil zwei, insbesondere eine, Doppelbindung zu verwenden.

Das Dual-Cure-Bindemittel enthält im statistischen Mittel mindestens eine der vorstehend beschriebenen mit aktinischer Strahlung aktivierbaren Gruppen. Dies bedeutet, daß die Funktionalität des Bindemittels in dieser Hinsicht ganzzahlig, d.h., beispielsweise gleich zwei, drei, vier, fünf oder mehr ist, oder nicht ganzzahlig, d.h., beispielsweise gleich 2,1 bis 10,5 oder mehr ist. Welche Funktionalität man wählt, richtet sich nach den Anforderungen, die an die jeweiligen Dual-Cure-Slurries gestellt werden.

Werden im statistischen Mittel mehr als eine mit aktinischer Strahlung aktivierbare Gruppe pro Molekül angewandt, sind die Gruppen strukturell voneinander verschieden oder von gleicher Struktur.

Sind sie strukturell voneinander verschieden, bedeutet dies im Rahmen der vorliegenden Erfindung, daß zwei, drei, vier oder mehr, insbesondere aber zwei, mit aktinischer Strahlung aktivierbare Gruppen verwendet werden, die sich von zwei, drei, vier oder mehr, insbesondere aber zwei, Monomerklassen ableiten.

Beispiele geeigneter Gruppen sind (Meth)Acrylat-, Ethacrylat-, Crotonat-, Cinnamat-, Vinylether-, Vinylester-, Dicyclopentadienyl-, Norbornenyl-, Isoprenyl-, Isopropenyl-, Allyl- oder Butenylgruppen; Dicyclopentadienyl-, Norbomenyl-, Isoprenyl-, Isopropenyl-, Allyl- oder Butenylethergruppen oder Dicyclopentadienyl-, Norbornenyl-, Isoprenyl-, Isopropenyl-, Allyl- oder Butenylestergruppen, insbesondere aber Acrylatgruppen.

Vorzugsweise sind die Gruppen über Urethan-, Hamstoff-, Allophanat-, Ester-, Ether- und/oder Amidgruppen, insbesondere aber über Estergruppen, an die jeweiligen. Grundstrukturen der Bindemittel gebunden. Üblicherweise geschieht dies durch übliche und bekannte kontinuierliche polymeranaloge Reaktionen wie etwa die Reaktion von seitenständigen Glycidylgruppen mit olefinisch ungesättigten Comonomeren, die eine Säuregruppe enthalten, von seitenständigen Hydroxylgruppen mit den Halogeniden dieser Comonomeren, von Hydroxylgruppen mit Doppelbindungen enhaltenden Isocyanaten wie Vinylisocyanat, Methacryloylisocyanat und/oder 1-(1-Isocyanato-1-methylethyl)-3-(1-methylethenyl)-benzol (TMI® der Firma CYTEC) oder von seitenständigen Isocanatgruppen mit den vorstehend beschriebenen hydroxylgruppenhaltigen Comomomeren.

Es können in den Partikeln indes auch Gemische aus rein thermisch härtbaren und rein mit aktinischer Strahlung härtbaren Bindemitteln angewandt werden.

Verfahren zur Herstellung der bevorzugt verwendeten Methacrylatcopolymerisate sind aus den vorstehend zitierten Patentanmeldungen, Patenten und Literaturstellen bekannt. Besonders bevorzugt werden die Methacrylatcopolymerisate unter Druck hergestellt.

Der Gehalt der dimensionsstabilen Partikel an den vorstehend beschriebenen Bindemitteln kann breit variieren. Vorzugsweise liegt er im Falle der thermisch fremdvernetzenden oder der thermisch fremdvernetzenden und mit aktinischer Strahlung härtbaren erfindungsgemäßen Slurries bei 5 bis 80, bevorzugt 6 bis 75, besonders bevorzugt 7 bis 70, ganz besonders bevorzugt 8 bis 65 und insbesondere 9 bis 60 Gew.-%, jeweils bezogen auf den Festkörper der erfindungsgemäßen Slurries. Im Falle der physikalisch härtbaren und der mit aktinischer Strahlung härtbaren, insbesondere aber der physikalisch härtbaren, erfindungsgemäßen Slurries kann der Gehalt bis zu 100 Gew.-% betragen.

Die dimensionsstabilen Partikel der thermisch oder thermisch und mit aktinischer Strahlung härtbaren erfindungsgemäßen Slurries können Vernetzungsmittel enthalten, die komplementäre reaktive funktionelle Gruppen für die thermische Vernetzung und/oder reaktive funktionelle Gruppen mit mindestens einer mit aktinischer Strahlung aktivierbaren Bindung aufweisen.

Als Vernetzungsmittel sind alle auf dem Gebiet der lichtstabilen Klarlackierungen gebräuchlichen Vernetzungsmittel geeignet. Beispiele geeigneter Vernetzungsmittel sind
- Aminoplastharze, wie sie beispielsweise in Römpp Lexikon Lacke und Druckfarben, Georg Thieme Verlag, 1998, Seite 29, »Aminoharze«, dem Lehrbuch "Lackadditive" von Johan Bieleman, Wiley-VCH, Weinheim, New York, 1998, Seiten 242 ff., dem Buch "Paints, Coatings and Solvents", second completely revised edition, Edit. D. Stoye und W. Freitag, Wiley-VCH, Weinheim, New York, 1998, Seiten 80 ff., den Patentschriften US 4 710 542 A 1 oder EP 0 245 700 A 1 sowie in dem Artikel von B. Singh und Mitarbeiter "Carbamylmethylated Melamines, Novel Crosslinkers for the Coatings Industry", in Advanced Organic Coatings Science and Technology Series, 1991, Band 13, Seiten 193 bis 207, beschrieben werden,
- Carboxylgruppen enthaltende Verbindungen oder Harze, wie sie beispielsweise in der Patentschrift DE 196 52 813 A 1 oder 198 41 408 A 1 beschrieben werden, insbesondere 1,12-Dodecandisäure,
- Epoxidgruppen enthaltende Verbindungen oder Harze, wie sie beispielsweise in den Patentschriften EP 0 299 420 A 1, DE 22 14 650 B 1, DE 27 49 576 B 1, US 4,091,048 A oder US 3,781,379 A beschrieben werden,
- Tris(alkoxycarbonylamino)triazine, wie sie in den Patentschriften US 4 939 213 A, US 5 084 541 A, US 5 288 865 A oder der Patentanmeldung EP 0 604 922 A beschrieben werden,
- blockierte Polyisocyanate, wie sie beispielsweise in den Patentschriften US 4,444,954 A 1, DE 196 17 086 A 1, DE 196 31 269 A 1, EP 0 004 571 A 1 oder EP 0 582 051 A 1 beschrieben werden, oder
- beta-Hydroxyalkylamide wie N,N,N',N'-Tetrakis(2-hydroxyethyl)adipamid oder N,N,N',N'-Tetrakis(2-hydroxypropyl)adipamid.

Die vorstehend beschriebenen Vernetzungsmittel können einzeln oder als Gemisch aus mindestens zwei Vernetzungsmittel eingesetzt werden. Erfindungsgemäß bieten die blockierten Polyisocyanate und/oder Tris(alkoxycarbonylamino)triazine, insbesondere die blockierten Polyisocyanate, besondere Vorteile und werden deshalb besonders bevorzugt verwendet.

Der Gehalt der dimensionsstabilen Partikel der erfindungsgemäßen Slurry an den Vernetzungsmitteln kann ebenfalls breit variieren und richtet sich in erster Linie nach der Funktionalität und Menge der Bindemittel einerseits und der Funktionalität der Vernetzungsmittel andererseits. Vorzugsweise liegt er bei 10 bis 95, bevorzugt 12 bis 94, besonders bevorzugt 14 bis 93, ganz besonders bevorzugt 16 bis 92 und insbesondere 18 bis 90 Gew.-%, jeweils bezogen auf den Festkörper der erfindungsgemäßen Slurry.

Die dimensionsstabilen Partikel der erfindungsgemäßen Slurry können neben den vorstehend beschriebenen wesentlichen Bestandteilen Additive enthalten, wie sie in Klarlacken üblicheniveise verwendet werden. Hierbei ist es wesentlich, daß diese Additive die Glasübergangstemperatur Tg der Bindemittel nicht wesentlich absenken.

Beispiele geeigneter Additive sind von den vorstehend beschriebenen Bindemitteln und Vernetzungsmitteln verschiedene Polymere, Katalysatoren für die Vernetzung, Entschäumer, Haftvermittler, Additive zur Verbesserung der Untergrundbenetzung, Additive zur Verbesserung der Oberflächenglätte, Mattierungsmittel, Lichtschutzmittel, Korrosionsinhibitoren, Biozide, Flammschutzmittel oder Polymerisationsinhibitoren, insbesondere Photoinhibitoren, wie sie in dem Buch "Lackadditive" von Johan Bielemann, Wiley-VCH, Weinheim, New York, 1998, beschrieben werden.

Darüber hinaus können die dimensionsstabilen Partikel noch von den vorstehend beschriebenen Bindemitteln verschiedene, mit aktinischer Strahlung härtbare Bestandteile als Additive enthalten, wenn erfindungsgemäße Slurry thermisch und mit aktinischer Strahlung oder mit aktinischer Strahlung alleine härtbar sein soll. Hierbei handelt es sich beispielsweise um
- die in den den europäischen Patentanmeldungen EP 0 928 800 A 1, EP 0 636 669 A 1, EP 0 410 242 A 1, EP 0 783 534 A 1, EP 0 650 978 A1, EP 0 650 979 A 1, EP 0 650 985 A 1, EP 0 540 884 A 1, EP 0 568 967 A 1, EP 0 054 505 A 1 oder EP 0 002 866 A 1, den deutschen Patentanmeldungen DE 197 09 467 A 1, DE 42 03 278 A1, DE 33 16 593 A 1, DE 38 36 370 A 1, DE 24 36 186 A 1 oder DE 20 03 579 B 1, den internationalen Patentanmeldungen WO 97/46549 oder WO 99/14254 oder den amerikanischen Patentschriften US 5,824,373 A, US 4,675,234 A, US 4,634,602 A, US 4,424,252 A, US 4,208,313 A, US 4,163,810 A, US 4,129,488 A, US 4,064,161 A oder US 3,974,303 A beschriebenen, zur Verwendung in UV-härtbaren Klarlacken und Pulverklarlacken vorgesehenen Bindemittel;
- mit aktinischer Strahlung härtbare Reaktiwerdünner, wie die in Römpp Lexikon Lacke und Druckfarben, Georg Thieme Verlag, Stuttgart, New York, 1998, auf Seite 491 unter dem Stichwort »Reaktivverdünner« beschriebenen; oder um
- Photoinitiatoren, wie sie in Römpp Chemie Lexikon, 9. erweiterte und neubearbeitete Auflage, Georg Thieme Verlag Stuttgart, Bd. 4, 1991, oder in Römpp Lexikon Lacke und Druckfarben, Georg Thieme Verlag Stuttgart, 1998, Seiten 444 bis 446, beschrieben werden.

Die erfindungsgemäße Slurry kann in der wäßrigen Phase ebenfalls Additive enthalten.

Vorzugsweise handelt es sich dabei um nichtionische und/oder ionische Verdicker. Hierdurch wird der Neigung der vergleichsweise großen festen Partikel zur Sedimentation wirksam begegnet.

Beispiele nichtionischer Verdicker sind Hydroxyethylcellulose und Polyvinylalkohole. Sogenannte nichtionische Assoziativ-Verdicker sind in vielfältiger Auswahl ebenfalls am Markt verfügbar. Sie bestehen in der Regel aus wasserverdünnbaren Polyurethanen, die Reaktionsprodukte von wasserlöslichen Polyetherdiolen, aliphatischen Diisocyanaten und monofunktionellen hydroxylischen Verbindungen mit organophilem Rest sind.

Ebenfalls kommerziell erhältlich sind ionische Verdicker. Diese enthalten üblicherweise anionische Gruppen und basieren insbesondere auf speziellen Polyacrylatharzen mit Säuregruppen, die teilweise oder vollständig neutralisiert sein können.

Beispiele geeigneter, erfindungsgemäß zu verwendender Verdicker sind aus dem Lehrbuch "Lackadditive" von Johan Bielemann, Wiley-VCH, Weinheim, New York, 1998, Seiten 31 bis 65, oder der deutschen Patentanmeldung DE 199 08 018 A 1 ,Seite 13, Zeile 18, bis Seite 14, Zeile 48, bekannt.

Für die erfindungsgemäße Slurry kann es vorteilhaft sein, wenn beide der vorstehend beschriebenen Verdicker-Typen hierin enthalten sind. In den allermeisten Fällen reicht jedoch ein Verdicker, insbesondere ein nichtionischer Verdicker, aus, um das gewünschte strukturviskose Verhalten einzustellen.

Die Menge der zuzusetzenden Verdicker und, sofern zwei unterschiedliche Verdicker angewandt werden, das Verhältnis von ionischem zu nichtionischem Verdicker richten sich nach der gewünschten Viskosität der erfindungsgemäßen Slurry, die wiederum von der benötigten Absetzstabilität und den speziellen Bedürfnissen der Spritzapplikation vorgegeben werden. Der Fachmann kann daher die Menge der Verdicker und gegebenenfalls das Verhältnis der Verdicker-Typen zueinander anhand einfacher Überlegungen gegebenenfalls unter Zuhilfenahme von Vorversuchen ermitteln.

Vorzugsweise wird ein Viskositätsbereich von 50 bis 1500 mPas bei einer Scherrate von 1000 s⁻¹ und von 150 bis 8000 mPas bei einer Scherrate von 10 S⁻¹ sowie von 180 bis 12000 mPas bei einer Scherrate von 1 S⁻¹ eingestellt.

Dieses als "strukturviskos" bekannte Viskositätsverhalten beschreibt einen Zustand, der einerseits den Bedürfnissen der Spritzapplikation und andererseits auch den Erfordernissen hinsichtlich Lager- und Absetzstabilität Rechnung trägt: Im bewegten Zustand, wie beispielsweise beim Umpumpen der erfindungsgemäßen Slurry in der Ringleitung der Lackieranlage und beim Versprühen, nimmt die erfindungsgemäße Slurry einen niederviskosen Zustand ein, der eine gute Verarbeitbarkeit gewährleistet. Ohne Scherbeanspruchung hingegen steigt die Viskosität an und gewährleistet auf diese Weise, daß der bereits auf dem zu lackierenden Substrat befindliche Lack eine verringerte Neigung zum Ablaufen an senkrechten Flächen zeigt ("Läuferbildung"). In gleicher Weise führt die höhere Viskosität im unbewegten Zustand, wie etwa bei der Lagerung, dazu, daß ein Absetzen der festen Partikel größtenteils verhindert wird oder ein Wiederaufrühren der während der Lagerzeit nur schwach abgesetzten erfindungsgemäßen Slurry gewährleistet ist.

Die wäßrige Phase der erfindungsgemäßen Slurry kann des weiteren im Film einvemetzbare Verlaufhilfsmittel, enthalten. Beispiele geeigneter Bestandteile dieser Art sind thermisch härtbare Reaktiwerdünner wie stellungsisomere Diethyloctandiole oder Hydroxylgruppen enthaltende hyperverzweigte Verbindungen oder Dendrimere wie sie in den deutschen Patentanmeldungen DE 198 05 421 A 1, DE 198 09 643 A 1 oder DE 198 40 405 A 1 beschrieben werden.

Die erfindungsgemäße Slurry kann in ihrer wäßrigen Phase noch mindestens ein, insbesondere ein, wasserlösliches Salz vorzugsweise in einer Menge von 0,1 bis 50 mmol pro 1.000 g an in der erfindungsgemäßen Slurry enthaltenem Wasser enthalten. Das Salz ist rückstandsfrei oder im wesentlichen rückstandsfrei zersetzbar. Dies bedeutet, daß es bei seiner Zersetzung keine Rückstände oder Rückstände in einer Menge bildet, die keine nachteiligen technischen Effekte in den erfindungsgemäßen Klarlackierungen hervorruft.

Das Salz kann mit Hilfe von Hitze und/oder aktinischer Strahlung zersetzbar sein. Vorzugsweise ist es thermisch zersetzbar. Bevorzugt ist es unter den Bedingungen der Härtung der aus den erfindungsgemäßen Slurries hergestellten erfindungsgemäßen Klarlackschichten zersetzbar. Erfindungsgemäß ist es von Vorteil, wenn das Salz bei Temperaturen oberhalb 100 °C zersetzbar ist. Vorzugsweise ist die Zersetzung des Salzes bei 250, bevorzugt 200, besonders bevorzugt 190 und insbesondere 180 °C beendet.

Bei der Zersetzung des Salzes können sich die unterschiedlichsten organischen, anorganischen und metallorganischen Zersetzungsprodukte bilden. So kann es sich bei den Zersetzungsprodukten um flüchtige Elemente, neutrale organische oder anorganische Wasserstoffverbindungen, organische und anorganische Basen, organische und anorganische Säuren oder Oxide handeln.

Beispiele für flüchtige Elemente sind Phosphor, Schwefel, Stickstoff oder Sauerstoff, insbesondere Stickstoff.

Beispiele für neutrale organische und anorganische Wasserstoffverbindungen sind Wasser oder Kohlenwasserstoffe, insbesondere Wasser.

Beispiele für organische und anorganische Basen sind Ammoniak, Methylamin, Dimethylamin oder Trimethylamin, insbesondere Ammoniak.

Beispiele für organische und anorganische Säuren sind Ameisensäure, Essigsäure, Propionsäure, Oxalsäure, Zitronensäure, Weinsäure, Salzsäure, Bromwasserstoff, Phosphorsäure, phosphorige Säure, Amidosulfonsäure, Schwefelsäure, schwefelige Säure, Thioschwefelsäure, HSCN oder Schwefelwasserstoff, insbesondere Essigsäure.

Beispiele für Oxide sind Kohlendioxid, Schwefeldioxid, Schwefeltrioxid oder Phosphoroxide, insbesondere Kohlendioxid.

Vorzugsweise wird ein Salz ausgewählt, dessen Zersetzungsprodukte nicht oder nur geringfügig toxisch und/oder nicht korrosiv oder nur geringfügig korrosiv sind. Bevorzugt wird in ein Salz ausgewählt, das als Zersetzungsprodukte Wasser, Stickstoff, Kohlendioxid, Ammoniak und organische Säuren bildet.

Besonders bevorzugt wird das Salz aus der Gruppe der Ammoniumsalze, ganz besonders bevorzugt aus der Gruppe, bestehend aus Salzen von Ammoniak und von organischen Aminen mit organischen und anorganischen Säuren, ausgewählt.

Insbesondere wird das Ammoniumsalz aus der Gruppe bestehend aus Ammoniumcarbonat, Ammoniumrhodanid, Ammoniumsulfamat, Ammoniumsulfitmonohydrat, Ammoniumformiat, Ammoniumacetat, Ammoniumhydrogenoxalatmonohydrat, Diammoniumoxalatmonohydrat, Ammoniumcitrat und Ammoniumtartrat ausgewählt. Von diesen sind wiederum Ammoniumcarbonat und Ammoniumacetat ganz besonders vorteilhaft und werden deshalb erfindungsgemäß ganz besonders bevorzugt verwendet.

Vorzugsweise wird die erfindungsgemäße Slurry durch das aus der deutschen Patentanmeldung DE 199 08 018 A 1 oder aus dem deutschen Patent DE 198 41 842 C 2 oder in der nicht vorveröffentlichten deutschen Patentanmeldung 100 55 464.4 beschriebene Sekundärdispersionsverfahren hergestellt.

Bei diesem Verfahren werden die ionisch stabilisierbaren Bindemittel und die Vernetzungsmittel sowie gegebenenfalls die Additive in organischer Lösung gemischt und zusammen mit Hilfe von Neutralisationmitteln in Wasser dispergiert. Sodann wird mit Wasser unter Rühren verdünnt. Es bildet sich zunächst eine Wasser-in-Öl-Emulsion aus, die bei weiterer Verdünnung in eine Öl-in-Wasser-Emulsion umschlägt. Dieser Punkt wird im allgemeinen bei Festkörpergehalten von < 50 Gew.-%, bezogen auf die Emulsion, erreicht und ist äußerlich an einem stärkeren Abfall der Viskosität während der Verdünnung erkennbar.

Die Öl-in-Wasser-Emulsion kann auch direkt durch die Schmelzeemulgierung der Bindemittel und der Vernetzungsmittel sowie gegebenenfalls der Additive in Wasser hergestellt werden.

Erfindungsgemäß ist es von Vorteil, wenn die erfindungsgemäß zu verwendenden Netzmittel der organischen Lösung und/oder dem Wasser vor oder während dem Emulgieren zugesetzt wird. Vorzugsweise werden sie der organischen Lösung zugegeben.

Die so erhaltene, noch lösemittelhaltige Emulsion wird anschließend durch azeotrope Destillation von Lösemitteln befreit.

Erfindungsgemäß ist es von Vorteil, wenn die zu entfernenden Lösemittel bei einer Destillationstemperatur unterhalb 70°C, bevorzugt unterhalb 50°C und insbesondere unterhalb 40°C abdestilliert werden. Gegebenenfalls wird der Destillationsdruck hierbei so gewählt, daß bei höhersiedenden Lösemitteln dieser Temperaturbereich eingehalten wird.

Im einfachsten Fall kann die azeotrope Destillation dadurch bewerkstelligt werden, daß man die Emulsion bei Raumtemperatur im offenen Gefäß während mehrerer Tage rührt. Im bevorzugten Fall wird die lösemittelhaltige Emulsion durch Vakuumdestillation von den Lösemitteln befreit.

Die abgedunstete oder abdestillierte Menge an Wasser und Lösemitteln werden zur Vermeidung von hohen Viskositäten durch Wasser ersetzt. Die Zugabe des Wassers kann vorher, nachher oder auch während des Abdunstens oder der Destillation durch portionsweise Zugabe erfolgen.

Nach Verlust der Lösemittel steigt die Glasübergangstemperatur Tg der dispergierten Teilchen an, und es bildet sich anstelle der bisherigen lösemittelhaltigen Emulsion eine Dispersion, d.h. die erfindungsgemäße Slurry, aus.

Die erfindungsgemäß zu verwendenden Salze können in unterschiedlicher Weise in die erfindungsgemäßen Slurries oder deren Vorstufen eingebracht werden. Beispielsweise können die Salze üblichen und bekannten Klarlack-Slurries zugesetzt werden, wodurch die erfindungsgemäßen Slurries resultieren. Sie können auch der organischen Lösung von Bestandteilen der erfindungsgemäßen Pulverslurry zugesetzt werden. Vorzugsweise werden sie vor dem Emulgieren der organischen Lösung im Wasser aufgelöst.

Gegebenenfalls werden die Partikel der erfindungsgemäßen Slurry im nassen Zustand mechanisch zerkleinert, was auch als Naßvermahlung bezeichnet wird. Vorzugsweise werden hierbei Bedingungen angewandt, daß die Temperatur des Mahlguts 70, bevorzugt 60 und insbesondere 50°C nicht überschreitet. Vorzugsweise beträgt der spezifische Energieeintrag während des Mahlprozesses 10 bis 1.000, bevorzugt 15 bis 750 und insbesondere 20 bis 500 Wh/g.

Für die Naßvermahlung können die unterschiedlichsten Vorrichtungen angewandt werden, die hohe oder niedrige Scherfelder erzeugen.

Beispiele geeigneter Vorrichtungen, die niedrige Scherfelder erzeugen, sind übliche und bekannte Rührkessel, Spalthomogenisatoren, Microfluidizer oder Dissolver.

Beispiele geeigneter Vorrichtungen, die hohe Scherfelder erzeugen, sind übliche und bekannte Rührwerksmühlen oder Inline-Dissolver.

Besonders bevorzugt werden die Vorrichtungen, die hohe Scherfelder erzeugen, angewandt. Von diesen sind die Rührwerksmühlen erfindungsgemäß besonders vorteilhaft und werden deshalb ganz besonders bevorzugt verwendet

Generell wird bei der Naßvermahlung die erfindungsgemäße Slurry mit Hilfe geeigneter Vorrichtungen, wie Pumpen, insbesondere Zahnradpumpen, den vorstehend beschriebenen Vorrichtungen zugeführt und im Kreis hierrüber gefahren, bis die gewünschte Teilchengröße erreicht ist.

Die erfindungsgemäße Slurry weist vorteilhafterweise einen Festkörpergehalt von 10 bis 60 Gew.-%, insbesondere von 20 bis 50 Gew.-%, auf.

Vorzugsweise wird die erfindungsgemäße Slurry vor ihrer Verwendung filtriert. Hierfür werden die üblichen und bekannten Filtrationsvorrichtungen und Filter verwendet, wie sie auch für die Filtration der bekannten Klarlack-Slurries in Betracht kommen. Die Maschenweite der Filter kann breit variieren und richtet sich in erster Linie nach der Teilchengröße und der Teilchengrößenverteilung der Partikel der erfindungsgemäßen Slurry. Der Fachmann kann daher die geeigneten Filter leicht anhand dieses physikalischen Parameters ermitteln. Beispiele geeigneter Filter sind Monofilament-Flächenfüter oder -Beutelfilter. Diese sind am Markt unter den Marken Pong® oder Cuno® erhältlich. Vorzugsweise werden Beutelfilter mit den Maschenweiten 25 bis 50 µm verwendet, beispielsweise Pong® 25 bis Pong® 50.

Zur Herstellung der erfindungsgemäßen Klarlackierungen wird die erfindungsgemäße Slurry auf das zu beschichtende Substrat appliziert. Hierbei brauchen keine besonderen Maßnahmen ergriffen zu werden, sondern die Applikation kann nach den üblichen und bekannten Verfahren erfolgen, was ein weiterer besonderer Vorteil der erfindungsgemäßen Slurry ist.

Nach ihrer Applikation trocknet die erfindungsgemäße Slurry problemlos auf und zeigt bei der Verarbeitungstemperatur, in der Regel bei Raumtemperatur, ein Verfilmen. D.h., die als Naßschicht applizierte erfindungsgemäße Slurry lüftet bei Raumtemperatur oder leicht erhöhten Temperaturen unter Wasserabgabe ab, wobei die darin enthaltenen Partikel ihre ursprüngliche Form verändern. Dadurch ist die Neigung zum "mudcracking" ausgesprochen gering.

In dem nachfolgenden Einbrennschritt wird die nun weitgehend wasserfreie Pulverschicht zur Vernetzung gebracht. In manchen Fällen kann es von Vorteil sein, den Verlaufprozess und die Vernetzungsreaktion mit einem zeitlichen Versatz ablaufen zu lassen, indem ein Stufenheizprogramm oder eine sogenannte Aufheizrampe gefahren wird. Die für die vorliegenden Beispiele angemessene Vernetzungstemperatur liegt zwischen 120 und 160°C. Die entsprechende Einbrennzeit liegt zwischen 20 und 60 Minuten.

Im Falle der erfindungsgemäßen Dual-Cure-Slurry wird die thermische Härtung noch durch die Härtung mit aktinischer Strahlung ergänzt, wobei die üblichen und bekannten Strahlenquellen und Verfahren, wie sie beispielsweise in der deutschen Patentanmeldung DE 198 18 735 A 1, Spalte 10, Zeile 31 bis Spalte 11, Zeile 22, beschrieben werden, angewandt werden können. Diese Verfahren und Vorrichtungen können auch für die Härtung der mit aktinischer Strahlung härtbaren erfindungsgemäßen Slurry angewandt werden.

Die hierbei resultierende Klarlackierung weist hervorragende anwendungstechnische Eigenschaften auf. So haftet sie fest auf allen üblichen und bekannten Basislackschichten oder auf Substraten wie Metall, Glas, Holz, Keramik, Stein, Beton oder Kunststoff. Sie ist von hohem Glanz, glatt, kratzfest, witterungsbeständig, chemikalienstabil und auch in hohem Schichtdicken frei von Störungen, wie Spannungsrisse oder Kocher. Bei Belastung mit Feuchtigkeit zeigt sie kein Weißanlaufen mehr.

Darüber hinaus ist sie frei von Mikrostörungen und zeigt keine störenden optischen Effekte, wie etwa einen dem Metallic-Effekt ähnelnden Sternenhimmel.

Vor allem aber hat die erfindungsgemäße Slurry eine sehr gute Filtrierbarkeit bei einer sehr guten Zahnradpumpengängigkeit.

Wegen dieses vorteilhaften Eigenschaftsprofils ist die erfindungsgemäße Slurry hervorragend für die Automobilerstlackierung, die Automobilreparaturlackierung, die Lackierung von Bauwerken im Innen- und Außenbereich, die Lackierung von Türen, Fenstern und Möbeln sowie die industrielle Lackierung, inklusive Coil Coating, Container Coating, die Lackierung von Kleinteilen, die Imprägnierung und/oder Beschichtung elektrotechnischer Bauteile oder die Lackierung von weißer Ware, geeignet. Hierbei wird sie vor allem zur Herstellung von Klarlackierungen im Rahmen von farb- und/oder effektgebenden Mehrschichtlackierungen verwendet, die nach den üblichen und bekannten Naß-in-naß-Verfahren aus Basislacken und der erfindungsgemäßen Slurry hergestellt werden.

Bei dem Naß-in-naß-Verfahren kann die erfindungsgemäße Slurry problemlos mit zahlreichen Basislacken, insbesondere Wasserbasislacken, kombiniert werden, ohne daß Probleme, wie Rißbildung, mangelnde Benetzbarkeit und schlechte Zwischenschichthaftung, auftreten.

Die erfindungsgemäße Slurry kann überraschenderweise auch als Klebstoff für die Herstellung von Klebschichten und als Dichtungsmasse für die Herstellung von Dichtungen, insbesondere auf den vorstehend genannten technischen Gebieten, eingesetzt werden.

### Beispiele und Vergleichsversuche

### Herstellbeispiel 1

### Die Herstellung eines erfindungsgemäß zu verwendenden Methacrylatcopolymerisats (Bindemittel)

39,75 Gewichtsteile Methylethylketon wurden in einem Reaktionsgefäß, ausgerüstet mit Rührer, Rückflußkühler, Ölheizung, Stickstoffeinleitungsrohr und zwei Zulaufgefäßen, vorgelegt und auf 78 °C aufgeheizt.

Hiernach wurde aus dem ersten Zulaufgefäß während 6,75 h eine Initiatorlösung aus 4 Gewichtsteilen Methylethylketon und 5 Gewichtsteilen TBPEH gleichmäßig zudosiert.

15 Minuten nach dem Beginn der Initiatordosierung wurde aus dem zweiten Zulaufgefäß eine Monomermischung aus 27,5 Gewichtsteilen n-Butylmethacrylat, 9,15 Gewichtsteilen i-Butylmethacrylat, 12,75 Gewichtsteilen Hydroxyethylmethacrylat und 0,6 Gewichtsteilen Methacrylsäure während 6 h gleichmäßig zudosiert. Anschließend wurde die Monomerleitung mit 0,25 Gewichtsteilen Methylethylketon und das Zulaufgefäß mit 0,5 Gewichtsteilen Methylethylketon gespült. Nach Beendigung des Initiatorzulaufs wurde das betreffende Zulaufgefäß ebenfalls mit 0,5 Gewichtsteilen Methylethylketon gespült.

Man ließ die Reaktionsmischung noch während 3 h bei 78 °C nachreagieren. Anschließend wurden die flüchtigen Anteile durch Vakuumdestillation entfernt, bis ein Festkörpergehalt von 70 Gew.-% eingestellt war. Danach wurde die Harzlösung ausgetragen. Sie wies eine Viskosität von 7,0 bis 10,0 dPas auf (Festharz 60prozentig Xylol bei 23 °C). Die Säurezahl lag bei 9,0 bis 11,0 und die Hydroxylzahl bei 110 mg KOH/g Festharz.

### Herstellbeispiel 2

### Die Herstellung eines blockiertes Polyisocyanats auf der Basis von Hexamethylendiisocyanat

534 Gewichtsteile Desmodur® N 3300 (handelsübliches lsocyanurat von Hexamethylendiisocyanat der Firma Bayer AG) und 200 Gewichtsteile Methylethylketon wurden in einem Reaktionsgefäß vorgelegt und auf 40°C erhitzt. Zu der Lösung gab man unter Kühlung 100 Gewichtsteile 2,5-Dimethylpyrazol zu und wartete das Abklingen der exothermen Reaktion ab. Danach wurden bei fortgesetzter Kühlung erneut 100 Gewichtsteile 2,5-Dimethylpyrazol hinzugegeben. Nach erneutem Abklingen der exothermen Reaktion wurden weitere 66 Gewichtsteile 2,5-Dimethylpyrazol zugegeben. Danach wurde die Kühlung abgestellt, wodurch sich das Reaktionsgemisch langsam auf 80°C erwärmte. Man hielt es bei dieser Temperatur, bis sein Isocyanatgehalt auf unter 0,1% gesunken war. Danach wurde das Reaktionsgemisch gekühlt und ausgetragen.

Die resultierende Lösung des blockierten Polyisocyanats wies einen Festkörpergehalt von 81 Gew.-% (1h bei 130°C) und eine Viskosität von 3,4 dPas (70%-ig in Methylethylketon; Platte-Kegel-Viskosimeter bei 23°C) auf.

### Beispiele 1 bis 4 und Vergleichsversuche V1 und V2

### Die Herstellung erfindungsgemäßer Slurries (Beispiele 1 bis 4) und nicht erfindungsgemäßer Slurries (Vergleichsversuche V1 und V2) und ihre anwendungstechnischen Eigenschaften

### Beispiel 1:

961,8 Gewichtsteile der Methacrylatcopolymerisatlösung des Herstellbeispiels 1 und 484,6 Gewichtsteile der Lösung des blockierten Polyisocyanats des Herstellbeispiels 2 wurden bei Raumtemperatur in einem offenen Rührgefäß während 15 Minuten miteinander vermischt. Zu der resultierenden Mischung wurden 21,5 Gewichtsteile Tinuvin ® 400 und 10,7 Gewichtsteile Tinuvin ® 123 (handelsübliche Lichtschutzmittel der Firma Ciba Specialty Chemicals, Inc.) und 15 Gewichtsteile Lutensol ® AT 50 (ethoxylierter mit Alkohol mit 16 bis 18 Kohlenstoffatome im Alkylrest und im statistischen Mittel 50 Ethylenoxid-Gruppen im Molekül der Firma BASF-Aktiengesellschaft) hinzugefügt, wonach die Mischung bei Raumtemperatur während 30 Minuten gerührt wurde. Anschließend wurden noch 0,86 Gewichtsteile Dibutylzinndliaurat und 4,68 Gewichtsteile Dimethylethanolamin hinzugefügt. Die resultierende Mischung wurde für weitere zwei Stunden bei Raumtemperatur gerührt.

Anschließend wurde sie mit 735 Gewichtsteilen deionisiertem Wasser, in dem 1,462 Gewichtsteile Ammoniumacetat gelöst waren, in kleinen Portionen versetzt. Nach einer Pause von 15 Minuten wurden weitere 780 Gewichtsteile deionisiertes Wasser innerhalb von 30 Minuten gleichmäßig hinzugegeben.

Die resultierende wäßrige Emulsion wurde mit 739 Gewichtsteilen deionisiertem Wasser verdünnt. Hiernach wurde ihr an einem Rotationsverdampfer unter Vakuum die gleiche Menge eines Gemischs aus flüchtigen organischen Lösemitteln und Wasser entzogen, bis der Festkörpergehalt bei 37 Gew.-% lag (1h bei 130°C).

Zur Einstellung der gewünschten Strukturviskosität wurden in die Slurry 90 Gewichtsteile Acrysol ® RM-8W (handelsüblicher nichtionischer Assoziativverdicker der Firma Rohm & Haas) und 1,57 Gewichtsteile Baysilon ® Al 3468 (handelsübliches Verlaufmittel der Firma Bayer AG) eingerührt.

### Beispiel 2:

Beispiel 1 wurde wiederholt, nur daß das Lutensol ® AT 50 der wäßrigen Phase vor dem Emulgieren zugesetzt wurde.

### Beispiel 3:

Beispiel 1 wurde wiederholt, nur daß anstelle von Lutensol ® AT 50 Lutensol ® AT 25 (ethoxylierter Fettalkohol mit 16 bis 18 Kohlenstoffatome im Alkylrest und im statistischen Mittel 25 Ethylenoxid-Gruppen im Molekül der Firma BASF-Aktiengesellschaft) verwendet wurde.

### Beispiel 4:

Beispiel 2 wurde wiederholt, nur daß anstelle von. Lutensol ® AT 50 Lutensol ® AT 25 verwendet wurde.

### Vergleichsversuch V1:

Beispiel 3 wurde wiederholt, nur daß das Lutensol ® AT 25 der fertigen Klarlack-Slurry zugesetzt wurde.

### Vergleichsversuch V2:

Vergleichsversuch V1 wurde wiederholt, nur daß kein Netzmittel verwendet wurde.

Die Tabelle 1 gibt einen Überblick über die Teilchengrößen, die strukturviskosen Eigenschaften sowie die Filtrierbarkeit vor und nach der 5fachen Passage der Slurries über eine Zahnradpumpe.

Die in der Tabelle 1 zusammengestellten Ergebnisse untermauern, daß nur die erfindungsgemäßen Slurries eine sehr gute Filtrierbarkeit und eine sehr gute Zahnradpumpengängigkeit aufwiesen. Dabei konnte die durch die erfindungsgemäß zu verwendenden Netzmittel hervorgerufene Abschwächung des strukturviskosen Verhaltens in Kauf genommen werden. Außerdem zeigen die Versuchsergebnisse, daß die Netzmittel ihre Wirkung am besten entfalten, wenn sie bei dem Sekundärdispersionsverfahren vor dem Emulgieren zugesetzt werden.

**Tabelle 1: Teilchengrößen, strukturviskoses Verhalten und Filtrierbarkeit der erfindungsgemäßen Slurries (Beispiele 1 bis 4) und der nicht erfindungsgemäßen Slurries (Vergleichsversuche V1 und V2)**

| **Eigenschaften** | **Beispiele:** | | | | | |
|---|---|---|---|---|---|---|
| | **Vergleichsvers.:** | | | | | |
| | **1** | **2** | **3** | **4** | **V1** | **V2** |
| Teilchengröße (µm)^{a)} | | | | | | |
| vor Zugabe von Verdicker: | | | | | | |
| mittlere Teilchengröße | 6,13 | 7,16 | 3,69 | 2,84 | 4,26 | 6,81 |
| d90 (90% der Teilchen <) | 10,28 | 13,36 | 7,76 | 4,81 | 9,19 | 15,12 |
| nach Zugabe von Verdicker: | | | | | | |
| mittlere Teilchengröße | 6,07 | 6,89 | 3,73 | 2,66 | 4,32 | 6,78 |
| d90 (90% der Teilchen <) | 10,32 | 12,22 | 8,17 | 5,29 | 9,7 | 15,2 |
| Viskosität^{b)} (dPas) | | | | | | |
| Scherrate (S⁻¹): | | | | | | |
| 10 | 87 | 209 | 224 | 434 | 751 | 904 |
| 100 | 45 | 129 | 137 | 244 | 469 | 129 |
| 1.000 | 29 | 79 | 73 | 131 | 229 | 66 |
| Filtrierbarkeit ^{c)}: | | | | | | |
| Durchgangsmenge (g) | | | | | | |
| bei Maschenweite: | | | | | | |
| 25 µm | 1.943 | 2.500 | 2.360 | 2.410 | 445 | 0 |
| 50 µm | - | - | - | - | - | 336 |
| Filtrierbarkeit ^{d)}: | | | | | | |
| Durchgangsmenge (g) | | | | | | |
| bei Maschenweite: | | | | | | |
| 25 µm | 1.880 | 1.200 | 2.191 | 450 | 0 | 0 |
| 50 µm | - | - | - | - | - | - |
| Filtrierbarkeit ^{e)}: | | | | | | |
| nach 5facher Passage | | | | | | |
| über die Zahnradpumpe: | | | | | | |
| Durchgangsmenge (g) | | | | | | |
| bei Maschenweite 25 µm | 107 | 67 | 93 | 300 | 0 | 0 |

| | | | | | | |
|---|---|---|---|---|---|---|
| a) Laserbeugungsmethode (Meßgerät der Firma Malvern); | | | | | | |
| b) Kegel-Platte-Viskosimeter bei 18 °C; | | | | | | |
| c) Beutelfilterplättchen, eingesetzte Menge an Slurry: 2.500 g; | | | | | | |
| d) Beutelfilterplättchen, eingesetzte Menge an Slurry: 2.500 g, Standzeit der Slurries: 4 Tage; | | | | | | |
| e) Beutelfilterplättchen, eingesetzte Menge an Slurry: 2.500 g; | | | | | | |

In einer ersten Serie wurden die unbelasteten filtrierten erfindungsgemäßen Slurries der Beispiele 1 bis 4 und die unbelastete filtrierte nicht erfindungsgemäße Slurry des Vergleichsversuchs V2 in Keilform auf Prüfbleche appliziert und während 30 Minuten bei 145 °C eingebrannt.

In einer zweiten Serie wurden die belasteten filtrierten erfindungsgemäßen Slurries der Beispiele 1 bis 4 und die belastete filtrierte nicht erfindungsgemäße Slurry des Vergleichsversuchs V2 in Keilform auf Prüfbleche appliziert und ebenfalls während 30 Minuten bei 145 °C eingebrannt.

Anhand der keilförmig aufgetragenen Klarlackierungen der Beispiele 1 bis 4 und des Vergleichsversuchs V2 wurden die Schichtdicken bestimmt, ab denen Kantenkocher und Flächenkocher auftraten. Außerdem wurde bestimmt, ab welchen Schichtdicken eine Benetzung des Untergrunds (Elektrotauchlackierung, KTL und Basislackierung »nachtschwarz« NS) eintrat. Die Ergebnisse finden sich in der Tabelle 2.

**Tabelle 2: Verlaufseigenschaften und Benetzungsverhalten der erfindungsgemäßen Klarlackierungen 1 bis 4 und der nicht erfindungsgemäßen Klarlackierung V2**

| **Eigenschaften** | **Beispiele** | | | | |
|---|---|---|---|---|---|
| | **Vergleichsvers.:** | | | | |
| | 1 | 2 | 3 | 4 | V2 |
| Unbelastete Slurry: | | | | | |
| | | | | | |
| Ab Schichtdicke (µm) | | | | | |
| Kantenkocher: | 168 | 145 | 150 | 150 | 160 |
| Flächenkocher: | 89 | 79 | 90 | 89 | 76 |
| Ab Schichtdicke (µm) | | | | | |
| Benetzung von | | | | | |
| KTL: | 24 | 18 | 15 | 15 | 19 |
| NS: | 28 | 11 | 11 | 19 | 19 |
| Belastete Slurry: | | | | | |
| | | | | | |
| Ab Schichtdicke (µm) | | | | | |
| Kantenkocher: | 166 | 150 | 163 | 149 | nicht |
| gemessen | | | | | |
| Flächenkocher: | 73 | 86 | 61 | 80 | nicht |
| gemessen | | | | | |
| Ab Schichtdicke (µm) | | | | | |
| Benetzung von | | | | | |
| KTL: | 25 | 18 | 18 | 15 | nicht |
| gemessen | | | | | |
| NS: | 12 | 15 | 14 | 11 | nicht |
| gemessen | | | | | |

| | | | | | |
|---|---|---|---|---|---|
| KTL Elektrotauchlackierung; | | | | | |
| NS Basislackierung »Nachtschwarz«; | | | | | |

Für eine dritte Serie wurde ein sogenannter integrierter Aufbau mit einem schwarzen Basislack vorbereitet.

Hierzu wurde auf mit handelsüblichem Elektrotauchlack kathodisch beschichteten Stahltafein mit einer Becherpistole zunächst eine Funktionsschicht (Ecoprime®; BASF Coatings AG) appliziert. Nach 5-minütigem Ablüften bei Raumtemperatur wurde auf diese Schicht in gleicher Weise ein schwarzer Wasserbasislack (Ecostar®; BASF Coatings AG) appliziert und anschließend für 5 min bei 80°C vorgetrocknet.

Nach Abkühlen der Tafeln wurden in gleicher Weise die belasteten filtrierten erfindungsgemäßen Slurries der Beispiele 1 bis 4 appliziert. Hiernach ließ man die Tafeln zunächst 5 min ablüften und anschließend 15 min lang bei 40°C vortrocknen. Dann wurden sie während 30 min bei 145°C in waagerechter Stellung eingebrannt.

Die applizierten Naßschichten waren so gewählt, daß nach dem Einbrennen die Trockenschichtdicken für die Funktionsschicht und den Wasserbasislack jeweils bei 15 µm lagen.

Wichtige anwendungstechnische Eigenschaften der erfindungsgemäßen Klarlackierungen 1 bis 4 finden sich in der Tabelle 3.

**Tabelle 3: Verlaufseigenschaften (Wave Scan) und Glanz/Haze der erfindungsgemäßen Klarlackierungen 1 bis 4**

| **Eigenschaften** | **Beispiele** | | | |
|---|---|---|---|---|
| | **1** | **2** | **3** | **4** |
| Schichtdicke (µm) | 54 | 46 | 52 | 45 |
| Glanz/Haze | | | | |
| (20 °) nach DIN 67530: | 83/11 | 83/12 | 83/5 | 83/5 |
| Wave Scan ^{a)} | | | | |
| Long Wave/Short Wave | 3,2/14,1 | 2,6/14,5 | 2,7/13,6 | 3,3/12,9 |

| | | | | |
|---|---|---|---|---|
| a) Meßgerät: Firma Byk/Gardner - Wave scan plus; | | | | |

Der Glanz und der Verlauf waren sehr gut. Die Chemikaüenbeständigkeit der erfindungsgemäßen Klarlackierungen war ebenfalls sehr gut.

## Patentansprüche

1. Strukturviskose Klarlack-Slurry, enthaltend feste und/oder hochviskose, unter Lagerungs- und Anwendungsbedingungen dimensionsstabile Partikel und mindestens ein Netzmittel, ausgewählt aus der Gruppe, bestehend aus alkoxylierten Fettalkoholen mit 16 bis 18 Kohlenstoffatomen im Alkylrest und im statistischen Mittel mindestens 20 Oxaalkandiyl-Gruppen im Molekül.

2. Strukturviskose Klarlack-Slurry nach Anspruch 1, **dadurch gekennzeichnet, daß** das Netzmittel im statistischen Mittel mindestens 25 Oxaalkandiyl-Gruppen im Molekül enthält.

3. Strukturviskose Klarlack-Slurry nach Anspruch 3, **dadurch gekennzeichnet, daß** das Netzmitteln im statistischen Mittel mindestens 45 Oxaalkandiyl-Gruppen im Molekül enthält.

4. Strukturviskose Klarlack-Slurry nach einem der Ansprüche 1 bis 3, **dadurch gekennzeichnet, daß** die Oxaalkandiyl-Gruppen aus der Gruppe, bestehend aus 1-Oxapropan-1,3-diyl, 1-Oxabutan-1,4-diyl, 1-Oxabutan-1,3-diyl, 1-Oxapentan-1,5-diyl oder 1-Oxapentan-1,3-diyl, ausgewählt werden.

5. Strukturviskose Klarlack-Slurry nach Anspruch 4, **dadurch gekennzeichnet, daß** daß die Oxaalkandiyl-Gruppen aus der Gruppe, bestehend aus 1-Oxapropan-1,3-diyl und 1-Oxabutan-1,3-diyl, gewählt werden.

6. Strukturviskose Klarlack-Slurry nach Anspruch 5, **dadurch gekennzeichnet, daß** die Oxaalkandiyl-Gruppe 1-Oxapropan-1,3-diyl (Ethylenoxid-Gruppe) ist.

7. Strukturviskose Klarlack-Slurry nach einem der Ansprüche 1 bis 6, **dadurch gekennzeichnet, daß** sie die Netzmittel in einer Menge von 0,01 bis 2,5, Gew.-%, jeweils bezogen auf die Klarlack-Slurry, enthält.

8. Strukturviskose Klarlack-Slurry nach einem der Ansprüche 1 bis 7, **dadurch gekennzeichnet, daß** sie mindestens ein wasserlösliches Salz, daß rückstandsfrei oder nahezu rückstandsfrei zersetzbar ist, enthält.

9. Strukturviskose Klarlack-Slurry nach Anspruch 8, **dadurch gekennzeichnet, daß** das Salz unter den Bedingungen der Härtung der aus der Klarlack-Slurry hergestellten Pulverklarlackschichten zersetzbar ist.

10. Strukturviskose Klarlack-Slurry nach Anspruch 8 oder 9, **dadurch gekennzeichnet, daß** das Salz thermisch und/oder mit aktinischer Strahlung zersetzbar ist.

11. Sirukturviskose Klarlack-Slurry nach Anspruch 10, **dadurch gekennzeichnet, daß** das Salz thermisch zersetzbar ist.

12. Strukturviskose Klarlack-Slurry nach einem der Ansprüche 8 bis 11, **dadurch gekennzeichnet, daß** das Salz aus der Gruppe der Ammoniumsalze ausgewählt wird.

13. Strukturviskose Klarlack-Slurry nach Anspruch 12, **dadurch gekennzeichnet, daß** das Ammoniumsalz aus der Gruppe bestehend aus Ammoniumcarbonat, Ammoniumrhodanid, Ammoniumsulfamat, Ammoniumsulfitmonohydrat, Ammoniumformiat, Ammoniumacetat, Ammoniumhydrogenoxalatmonohydrat, Diammoniumoxalatmonohydrat und Ammoniumcitrat, ausgewählt wird.

14. Strukturviskose Klarlack-Slurry nach Anspruch 13, **dadurch gekennzeichnet, daß** das Ammoniumsalz aus der Gruppe, bestehend aus Ammoniumcarbonat und Ammoniumacetat ausgewählt wird.

15. Strukturviskose Klarlack-Slurry nach einem der Ansprüche 1 bis 14, **dadurch gekennzeichnet, daß** die Partikel eine mittlere Teilchengröße von 0,8 bis 20 µm und eine maximale Teilchengröße von 30 µm haben.

16. Strukturviskose Klarlack-Slurry nach einem der Ansprüche 1 bis 15, **dadurch gekennzeichnet, daß** sie thermisch oder thermisch und mit aktinischer Strahlung härtbar ist.

17. Strukturviskose Klarlack-Slurry nach einem der Ansprüche 1 bis 16, **dadurch gekennzeichnet, daß** die dimensionsstabilen Partikel als Bindemittel Methacrylatcopolymerisate enthalten, die, bezogen auf ein gegebenes Methacrylatcopolymerisat, mindestens 90 Gew.-% Methacrylatcomonomere, inklusive potentiell ionische Gruppen enthaltende (Meth)Acrylatcomonomere, einpolymerisiert enthalten.

18. Strukturviskose Klarlack-Slurry nach Anspruch 17, **dadurch gekennzeichnet, daß** die Methacrylatcopolymerisate, bezogen auf ein gegebenes Methacrylatcopolymerisat, mehr als 99 Gew.-% Methacrylatcomonomere, inklusive potentiell ionischen Gruppen enthaltende (Meth)Acrylatcomonomere, einpolymerisiert enthalten.

19. Strukturviskose Klarlack-Slurry nach Anspruch 17 oder 18, **dadurch gekennzeichnet, daß** die potentiell ionische Gruppen enthaltenden Methacrylatcomonomere aus der Gruppe, bestehend aus Acrylsäure, beta-Carboxyethylacrylat und Methacrylsäure, ausgewählt werden.

20. Strukturviskose Klarlack-Slurry nach einem der Ansprüche 1 bis 19, **dadurch gekennzeichnet**, **dadurch gekennzeichnet, daß** sie von organischen Lösemitteln im wesentlichen oder völlig frei ist.

21. Strukturviskose Klarlack-Slurry nach einem der Ansprüche 1 bis 20, **dadurch gekennzeichnet, daß** sie durch
1) Emulgieren einer organischen Lösung von Bestandteilen der Klariack-Slurry in Wasser, wodurch eine Emulsion vom Typ ÖI-in-Wasser resultiert,
2) Entfernen des organischen Lösemittels oder der organische Lösemittel und
3) teilweisen oder völligen Ersatz des entfernten Lösemittelvolumens durch Wasser
herstellbar ist.

22. Strukturviskose Klarlack-Slurry nach Anspruch 21, **dadurch gekennzeichnet, daß** das Netzmittel vor dem Verfahrensschritt 1) der organischen Lösung und/oder dem Wasser zugesetzt wird.

23. Verwendung der Klarlack-Slurry gemäß einem der Ansprüche 1 bis 22 für die Automobilerstlackierung, die Automobilreparaturlackierung, die Lackierung von Bauwerken im Innen- und Außenbereich, die Lackierung von Türen, Fenstern und Möbeln sowie die industrielle Lackierung, inklusive Coil Coating, Container Coating, die Kleinteilelackierung, die Imprägnierung und/oder Beschichtung elektrotechnischer Bauteile und die Lackierung von weißer Ware.

24. Verwendung nach Anspruch 23, **dadurch gekennzeichnet, daß** die Klarlack-Slurry zur Herstellung von Klarlackierungen im Rahmen von farb- und/oder effektgebenden Mehrschichtlackierungen verwendet wird.

25. Verwendung der strukturviskosen Klarlack-Slurry gemäß einem der Ansprüche 1 bis 22 als Klebstoff oder Dichtungsmasse zur Herstellung von Klebschichten und Dichtungen.

## Claims

1. Pseudoplastic clearcoat slurry comprising solid and/or highly viscous particles which are dimensionally stable under storage and application conditions and at least one wetting agent selected from the group consisting of alkoxylated fatty alcohols having from 16 to 18 carbon atoms in the alkyl radical and containing on average per molecule at least 20 oxaalkanediyl groups.

2. Pseudoplastic clearcoat slurry according to Claim 1, **characterized in that** the wetting agent contains on average per molecule at least 25 oxaalkanediyl groups.

3. Pseudoplastic clearcoat slurry according to Claim 3, **characterized in that** the wetting agent contains on average per molecule at least 45 oxaalkanediyl groups.

4. Pseudoplastic clearcoat slurry according to any of Claims 1 to 3, **characterized in that** the oxaalkanediyl groups are selected from the group consisting of 1-oxapropane-1,3-diyl, 1-oxabutane-1,4-diyl, 1-oxabutane-1,3-diyl, 1-oxapentane-1,5-diyl, and 1-oxapentane-1,3-diyl.

5. Pseudoplastic clearcoat slurry according to Claim 4, **characterized in that** the oxaalkanediyl groups are selected from the group consisting of 1-oxapropane-1,3-diyl and 1-oxabutane-1,3-diyl.

6. Pseudoplastic clearcoat slurry according to Claim 5, **characterized in that** the oxaalkanediyl group is 1-oxapropane-1,3-diyl (ethylene oxide group).

7. Pseudoplastic clearcoat slurry according to any of Claims 1 to 6, **characterized in that** it comprises the wetting agents in an amount of from 0.01 to 2.5% by weight, based in each case on the clearcoat slurry.

8. Pseudoplastic clearcoat slurry according to any of Claims 1 to 7, **characterized in that** it comprises at least one water-soluble salt which can be decomposed without residue or virtually without residue.

9. Pseudoplastic clearcoat slurry according to Claim 8, **characterized in that** the salt is decomposable under the conditions of the curing of the powder clearcoat films produced from the clearcoat slurry.

10. Pseudoplastic clearcoat slurry according to Claim 8 or 9, **characterized in that** the salt is decomposable thermally and/or with actinic radiation.

11. Pseudoplastic clearcoat slurry according to Claim 10, **characterized in that** the salt is thermally decomposable.

12. Pseudoplastic clearcoat slurry according to any of Claims 8 to 11, **characterized in that** the salt is selected from the group of ammonium salts.

13. The pseudoplastic clearcoat slurry according to Claim 12, **characterized in that** the ammonium salt is selected from the group consisting of ammonium carbonate, ammonium thiocyanate, ammonium sulphamate, ammonium sulphite monohydrate, ammonium formate, ammonium acetate, ammonium hydrogen oxalate monohydrate, diammonium oxalate monohydrate and ammonium citrate.

14. Pseudoplastic clearcoat slurry according to Claim 13, **characterized in that** the ammonium salt is selected from the group consisting of ammonium carbonate and ammonium acetate.

15. Pseudoplastic clearcoat slurry according to any of Claims 1 to 14, **characterized in that** the particles have an average size of from 0.8 to 20 µm and a maximum size of 30 µm.

16. Pseudoplastic clearcoat slurry according to any of Claims 1 to 15, **characterized in that** it is curable thermally or thermally and with actinic radiation.

17. Pseudoplastic clearcoat slurry according to any of Claims 1 to 16, **characterized in that** the dimensionally stable particles comprise as binders methacrylate copolymers containing in copolymerized form, based on a given methacrylate copolymer, at least 90% by weight of methacrylate comonomers, including (meth)acrylate comonomers containing potentially ionic groups.

18. Pseudoplastic clearcoat slurry according to Claim 17, **characterized in that** the methacrylate copolymers contain in copolymerized form, based on a given methacrylate copolymer, more than 99% by weight of methacrylate comonomers, including (meth)acrylate comonomers containing potentially ionic groups.

19. Pseudoplastic clearcoat slurry according to Claim 17 or 18, **characterized in that** the methacrylate comonomers containing potentially ionic groups are selected from the group consisting of acrylic acid, beta-carboxyethyl acrylate and methacrylic acid.

20. Pseudoplastic clearcoat slurry according to any of Claims 1 to 19, **characterized in that** it is substantially or entirely free from organic solvents.

21. Pseudoplastic clearcoat slurry according to any of Claims 1 to 20, **characterized in that** it is preparable by
1) emulsifying an organic solution of constituents of the clearcoat slurry in water to give an emulsion of the oil-in-water type,
2) removing the organic solvent or the organic solvents, and
3) replacing by water some or all of the volume of solvent removed.

22. Pseudoplastic clearcoat slurry according to Claim 21, **characterized in that** the wetting agent is added to the organic solution and/or to the water prior to step 1) of the process.

23. Use of the clearcoat slurry according to any of Claims 1 to 22 for automotive OEM finishing, automotive refinish, the interior and exterior painting of buildings, the coating of doors, windows and furniture, and industrial coating, including coil coating, container coating, the coating of small parts, the impregnation and/or coating of electrical components, and the coating of white goods.

24. Use according to Claim 23, **characterized in that** the clearcoat slurry is used to produce clearcoats as a part of multicoat colour and/or effect paint systems.

25. Use of the pseudoplastic clearcoat slurry according to any of Claims 1 to 22 as an adhesive or sealing compound for producing adhesive films and seals.

## Revendications

1. Suspension de vernis transparent à viscosité intrinsèque, contenant des particules solides et/ou à haute viscosité, dimensionnellement stables dans les conditions d'entreposage et d'utilisation, et au moins un agent mouillant, choisi dans le groupe formé par des alcools gras alcoxylés comportant de 16 à 18 atomes de carbone dans le radical alkyle et, en moyenne statistique, au moins 20 groupes oxaalcanediyle par molécule.

2. Suspension de vernis transparent à viscosité intrinsèque selon la revendication 1, **caractérisée en ce que** l'agent mouillant contient, en moyenne statistique, au moins 25 groupes oxaalcanediyle par molécule.

3. Suspension de vernis transparent à viscosité intrinsèque selon la revendication 3, **caractérisée en ce que** l'agent mouillant contient, en moyenne statistique, au moins 45 groupes oxaalcanediyle par molécule.

4. Suspension de vernis transparent à viscosité intrinsèque selon l'une quelconque des revendications 1 à 3, **caractérisée en ce que** les groupes oxaalcanediyle sont choisis dans le groupe formé par le 1-oxapropane-1,3-diyle, le 1-oxabutane-1,4-diyle, le 1-oxabutane-1,3-diyle, le 1-oxapentane-1,5-diyle ou le 1-oxapentane-1,3-diyle.

5. Suspension de vernis transparent à viscosité intrinsèque selon la revendication 4, **caractérisée en ce que** les groupes oxaalcanediyle sont choisis dans le groupe formé par le 1-oxapropane-1,3-diyle et le 1-oxabutane-1,3-diyle.

6. Suspension de vernis transparent à viscosité intrinsèque selon la revendication 5, **caractérisée en ce que** le groupe oxaalcanediyle est du 1-oxapropane-1,3-diyle (groupe oxyde d'éthylène).

7. Suspension de vernis transparent à viscosité intrinsèque selon l'une quelconque des revendications 1 à 6, **caractérisée en ce qu'**elle contient l'agent mouillant en une quantité de 0,01 à 2,5% en poids, à chaque fois par rapport à la suspension de vernis transparent.

8. Suspension de vernis transparent à viscosité intrinsèque selon l'une quelconque des revendications 1 à 7, **caractérisée en ce qu'**elle contient au moins un sel soluble dans l'eau qui peut être décomposé sans résidus ou pratiquement sans résidus.

9. Suspension de vernis transparent à viscosité intrinsèque selon la revendication 8, **caractérisée en ce que** le sel est décomposable dans les conditions de durcissement des couches de vernis transparent en poudre préparées à partir de la suspension de vernis transparent.

10. Suspension de vernis transparent à viscosité intrinsèque selon la revendication 8 ou 9, **caractérisée en ce que** le sel est décomposable par voie thermique et/ou par un rayonnement actinique.

11. Suspension de vernis transparent à viscosité intrinsèque selon la revendication 10, **caractérisée en ce que** le sel est décomposable par voie thermique.

12. Suspension de vernis transparent à viscosité intrinsèque selon l'une quelconque des revendications 8 à 11, **caractérisée en ce que** le sel est choisi dans le groupe des sels d'ammonium.

13. Suspension de vernis transparent à viscosité intrinsèque selon la revendication 12, **caractérisée en ce que** le sel d'ammonium est choisi dans le groupe formé par du carbonate d'ammonium, du rhodanure d'ammonium, du sulfamate d'ammonium, du sulfite d'ammonium monohydraté, du formiate d'ammonium, de l'acétate d'ammonium, de l'hydrogéno-oxalate d'ammonium monohydraté, de l'oxalate de diammonium monohydraté et du citrate d'ammonium.

14. Suspension de vernis transparent à viscosité intrinsèque selon la revendication 13, **caractérisée en ce que** le sel d'ammonium est choisi dans le groupe formé par le carbonate d'ammonium et l'acétate d'ammonium.

15. Suspension de vernis transparent à viscosité intrinsèque selon l'une quelconque des revendications 1 à 14, **caractérisée en ce que** les particules ont une taillé moyenne de particules de 0,8 à 20 µm et une taille maximale de particules de 30 µm.

16. Suspension de vernis transparent à viscosité intrinsèque selon l'une quelconque des revendications 1 à 15, **caractérisée en ce qu'**elle est durcissable par voie thermique ou par voie thermique et au moyen d'un rayonnement actinique.

17. Suspension de vernis transparent à viscosité intrinsèque selon l'une quelconque des revendications 1 à 16, **caractérisée en ce que** les particules dimensionnellement stables contiennent en tant que liant des copolymères de méthacrylate qui, par rapport à un copolymère de méthacrylate donné, contiennent, à l'état copolymérisé, au moins 90% en poids de comonomères de méthacrylate, ceci comprenant des comonomères de (méth)acrylate contenant des groupes potentiellement ioniques.

18. Suspension de vernis transparent à viscosité intrinsèque selon la revendication 17, **caractérisée en ce que** les copolymères de méthacrylate contiennent, à l'état copolymérisé et par rapport à un copolymère de méthacrylate donné, plus de 99% en poids de comonomères de méthacrylate, ceci comprenant des comonomères de (méth)acrylate contenant des groupes potentiellement ioniques.

19. Suspension de vernis transparent à viscosité intrinsèque selon la revendication 17 ou 18, **caractérisée en ce que** les comonomères de méthacrylate contenant des groupes potentiellement ioniques sont choisis dans le groupe formé par l'acide acrylique, l'acrylate de β-carboxyéthyle et l'acide méthacrylique.

20. Suspension de vernis transparent à viscosité intrinsèque selon l'une quelconque des revendications 1 à 19, **caractérisée en ce qu'**elle est essentiellement ou totalement exempte de solvants organiques.

21. Suspension de vernis transparent à viscosité intrinsèque selon l'une quelconque des revendications 1 à 20, **caractérisée en ce qu'**elle peut être préparée par
1) émulsification d'une solution organique de constituants de la suspension de vernis transparent, d'où il résulte une émulsion de type huile dans l'eau,
2) élimination du solvant organique ou des solvants organiques, et
3) remplacement partiel ou total du volume de solvant éliminé par de l'eau.

22. Suspension de vernis transparent à viscosité intrinsèque selon la revendication 21, **caractérisée en ce que** l'agent mouillant est ajouté, avant l'étape 1) du procédé, à la solution organique et/ou à l'eau.

23. Utilisation de la suspension de vernis transparent selon l'une quelconque des revendications 1 à 22 pour le premier vernissage d'automobiles, le vernissage de réparation automobile, le vernissage de constructions à l'intérieur et à l'extérieur, le vernissage de portes, de fenêtres et de meubles, ainsi que le vernissage industriel, ceci comprenant le couchage sur bande, le vernissage de récipients, le vernissage de petites pièces, l'imprégnation et/ou l'enduction de composants électrotechniques et le vernissage d'appareils électroménagers.

24. Utilisation selon la revendication 23, **caractérisée en ce que** la suspension de vernis transparent est utilisée pour la préparation de vernis transparents dans le cadre de vernissages multicouches teintants et/ou à effet.

25. Utilisation de la suspension de vernis transparent à viscosité intrinsèque selon l'une quelconque des revendications 1 à 22 en tant qu'adhésif ou masse d'étanchéité pour la préparation de couches adhésives et de joints d'étanchéité.
